# EUROPEAN PATENT SPECIFICATION

(11) **EP 3 457 634 B1**
(45) Date of publication and mention of the grant of the patent: **30.12.2020**
(21) Application number: 17191363.5
(22) Date of filing: 15.09.2017
(51) Int. Cl.: H04L 12/26, H04L 12/24

(54) **COLLECTION OF MANAGEMENT PLANE PERFORMANCE DATA**
SAMMLUNG VON LEISTUNGSDATEN AUF VERWALTUNGSEBENE
COLLECTE DE DONNÉES DE PERFORMANCE DE PLAN DE GESTION

(43) Date of publication of application: 20.03.2019
(73) Proprietor: Nokia Technologies Oy, 02610 Espoo (FI)
(72) Inventor: Hätönen, Kimmo, 00650 Helsinki (FI); Kapoor, Shubham, 00400 Helsinki (FI); Kojola, Ville, 90570 Oulu (FI); Tarkoma, Sasu, 00100 Helsinki (FI)
(74) Representative: Kolster Oy Ab

(56) References cited:
- US-A1- 2014 222 996
- US-A1- 2015 113 132
- US-A1- 2015 333 992

## Description

### TECHNICAL FIELD

The present disclosure relates generally to communication networks and, more particularly but not exclusively, to supporting collection of data in communication networks.

### BACKGROUND

In many communication networks, managed devices obtain performance data and provide the performance data to one or more management entities as management plane performance data. As the number of managed devices increases, there may be a need for solutions that decrease the amount of management plane performance data that is transferred from managed devices to management entities.

US2105/113132 relates to programmable network using a remote manager, US 2014/222996 relates to monitored network and US 2015/333992 relates to network metrics.

### SUMMARY

The present disclosure generally discloses support for data collection in communication networks.

According to an aspect of the present invention, there are provided apparatuses of claims 1 and 10

### BRIEF DESCRIPTION OF THE DRAWINGS

The teachings herein can be readily understood by considering the following detailed description in conjunction with the accompanying drawings, in which:
FIG. 1 depicts a system configured to support collection of management plane performance data in a communication network;
FIG. 2 depicts an example of a physical cellular communication system configured to support collection of management plane performance data;
FIG. 3 depicts an example of a virtualized cellular communication system configured to support collection of management plane performance data;
FIG. 4 depicts a data collection system for illustrating points within a QoM classification model management process at which automation techniques may be applied for automating management of a QoM classification model;
FIG. 5 depicts embodiments for automation of QoM classification model generation functions;
FIG. 6 depicts an embodiment for automation of the QoM classification model selection and adaptation functions in the local learning phase;
FIG. 7 depicts an embodiment for continuous monitoring and analysis of a QoM compression function performing data selection based on a QoM classification model;
FIG. 8 depicts an embodiment for automation of the QoM classification model selection and adaptation functions in the global learning phase;
FIG. 9 depicts an embodiment of the data collection control capability in which learning of the QoM classification model based on automation techniques is performed at the receiver site;
FIG. 10 depicts an embodiment of the data collection control capability in which learning of the QoM classification model based on automation techniques is performed at the sender site for a given training period;
FIG. 11 depicts an embodiment of the data collection control capability in which learning of the QoM classification model based on automation techniques is performed at the sender site using continuous training;
FIG. 12 depicts an embodiment of the data collection control capability in which learning of the QoM classification model based on automation techniques is performed at the sender site using an initial QoM classification model from the receiver site with a given training period;
FIG. 13 depicts an embodiment of the data collection control capability in which learning of the QoM classification model based on automation techniques is performed at the sender site using an initial QoM classification model from the receiver site with continuous training;
FIG. 14 depicts an embodiment of a method for use by an element of a receiver site to provide embodiments of the data collection control capability;
FIG. 15 depicts an embodiment of a method for use by an element of a sender site to provide embodiments of the data collection control capability; and
FIG. 16 depicts a high-level block diagram of a computer suitable for use in performing various functions presented herein.

To facilitate understanding, identical reference numerals have been used, where possible, to designate identical elements that are common to the figures.

### DETAILED DESCRIPTION

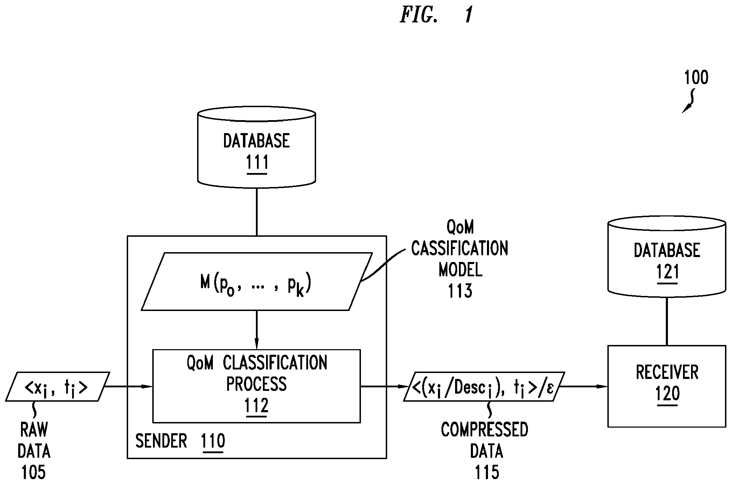

The present disclosure generally discloses a data collection control capability that is configured to support collection of management plane performance data in a communication network. The data collection control capability may be configured to be applied within the context of a communication network, including managed devices that obtain management plane performance data and management devices to which management plane performance data is provided, in order to reduce the amount of management plane performance data that is transferred from the managed devices to management devices. The data collection control capability may be configured to support collection of management plane performance data based on application, at the managed devices, of management plane performance data collection models configured to compress the amount of management plane performance data transferred from the managed devices to management devices. The data collection control capability may be configured to automate generation and modification of the management plane performance data collection models that are applied at the managed devices for reducing the amount of management plane performance data transferred from the managed devices to management devices. The data collection control capability may be configured to automate generation and modification of the management plane performance data collection models using various automation techniques (e.g., machine learning, data analysis, neural networks, or the like, as well as various combinations thereof). The data collection control capability may be configured to support collection of management plane performance data within various contexts (e.g., for transfer of management plane performance data from network elements to management systems, for transfer of management plane performance data between network elements, or transfer of management plane performance data between management systems, for transfer of management plane performance data from end devices to network devices, for transfer of management plane performance data between end devices, or the like, as well as various combinations thereof). It will be appreciated that these and various other embodiments and advantages and potential advantages of the data collection control capability may be further understood by way of reference to the example system of FIG. 1.

FIG. 1 depicts a system configured to support collection of management plane performance data in a communication network.

The system 100 includes a sender 110 and a receiver 120 which are configured to cooperate to support collection of data. The sender 110 may be configured to obtain raw data 105, compress the raw data 105 in order to provide compressed data 115, and send the compressed data 115 to the receiver 120. The sender 110 also may store the raw data 105 and the compressed data 115 locally in a database 111 associated with the sender 110. The receiver 120 may be configured to receive the compressed data 115 from the sender 110. The receiver 120 also may store the compressed data 115 in a database 121 associated with the receiver 120.

The system 100, including the sender 110 and the receiver 120 which are configured to cooperate to support collection of data, may be configured to support collection of management plane (M-plane) data. For example, the sender 110 may be a managed device or entity and the receiver 120 may be a management device or entity, in which case the raw data 105 and the compressed data 115 may be M-plane data. The M-plane data may include performance data which may be obtained at the sender 110 (e.g., acquired, measured, or the like) for reporting to the receiver 120 (e.g., for use in performing management functions) and, as such, may be referred to as management plane performance data. The management plane performance data may include performance indicators, which may be in the form of measurement data, counters, Key Performance Indicators (KPIs), or the like, as well as various combinations thereof.

The sender 110, as discussed above, may be configured to obtain the raw data 105, compress the raw data 105 in order to provide the compressed data 115, and send the compressed data 115 to the receiver 120.

The sender 110 may be configured to compress the raw data 105, in order to provide the compressed data 115, based on quality-of-monitoring (QoM) class based data compression. In QoM class based data compression, the meaningful (or more meaningful) data is selected by the sender 110 and provided from the sender 110 to the receiver 120 while the meaningless (or less meaningful) data is not selected by the sender 110 and, as such, is not provided by the sender 110 to the receiver 120. In this manner, the raw data 105 is compressed into the compressed data 115.

The sender 110 may be configured to compress the raw data 105 to provide the compressed data 115, based on QoM class based data compression, using a QoM compression element 112 and a QoM classification model 113 available at the sender 110. The QoM compression element 112 may be configured to select or filter a subset of the raw data 105, based on the QoM classification model 113, in order to obtain the compressed data 115. The QoM compression element 112 receives the raw data 105 (which is represented using <xᵢ, tᵢ>, where xi is the parameter value and ti is a timestamp that is associated with the parameter value) and applies the QoM classification model 113 (which is represented using M(p₀, ... , pₖ), where pi are the QoM classification parameters of the QoM classification model *M*) to each of the parameter values xi of the raw data 105 to obtain the compressed data 115. The compressed data 115 is represented as <(xᵢ / Descᵢ), tᵢ> / ε, which indicates that the sender 110 is sending the parameter value xi if the parameter value xᵢ is determined to be meaningful / informative or is sending either a descriptor (Desci) or nothing (ε) if the parameter value xᵢ is determined to be meaningless / uninformative. The descriptor (Desci) may be a tag or value indicative that the value of the parameter has not changed (e.g., if the data is being sent as an ASCII string of numbers, a letter (e.g., "s") may be sent instead of a number to indicate that the value has not changed). In other words, the QoM compression element 112 applies the QoM classification model 113 to the raw data 105 in order to control the portions of the raw data 105 that are omitted from the compressed data 115 that is provided from the sender 110 to the receiver 120.

The receiver 120, as discussed above, may be configured to receive the compressed data 115 from the sender 110. The receiver 120 may process the compressed data 115 for various purposes. The receiver 120 may provide the compressed data 115 to one or more other entities for use by the one or more other entities for various purposes.

The system 100 may be used within various communication contexts and, as such, the sender 110 and the receiver 120 may include various types of senders and receivers, respectively, and, similarly, the associated raw data 105 and compressed data 115 may include various types of data which may be obtained by sender 110 and provided to the receiver 120.

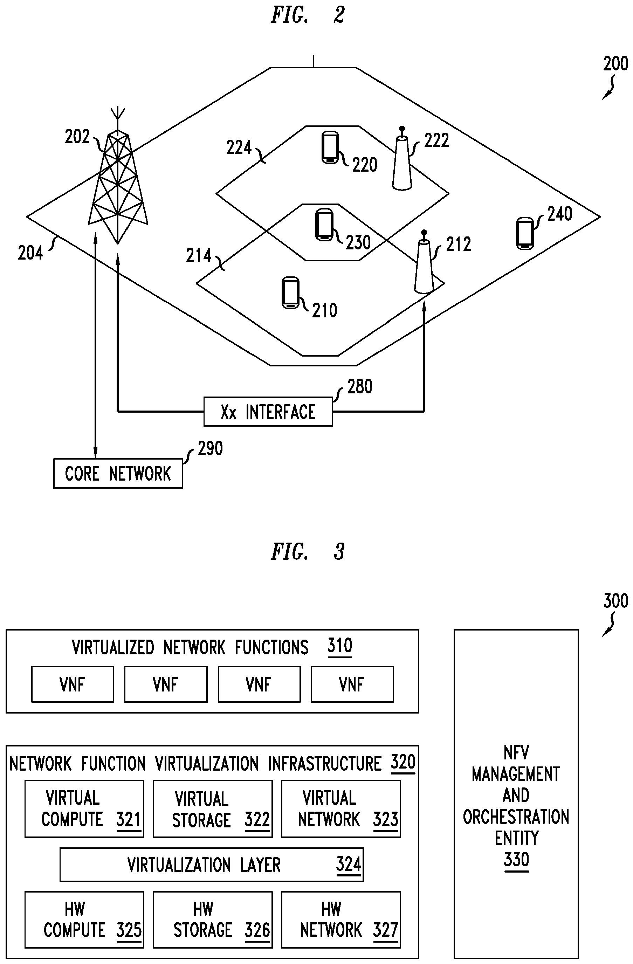

For example, the system 100 may be provided within the context of a communication network, such as a wireline network, a wireless network (e.g., a cellular network or the like), or the like, as well as various combinations thereof. For example, the system 100 may be provided within the context of a physical cellular network (an example of which is presented with respect to FIG. 2), a virtualized or partially virtualized cellular network (an example of which is presented with respect to FIG. 3), or the like. In at least some such embodiments, the sender 110 may be a cellular access device and the receiver 120 may be a network management system (NMS) of the cellular network and, further, the raw data 105 and the compressed data 115 may include various types of M-plane data which may be collected by the cellular network device and used by the NMS. It is noted that other arrangements are contemplated.

For example, the system 100 may be provided within the context of an Internet-of-Things (IoT) environment. In at least some such embodiments, the sender 110 may be an IoT device (e.g., a sensor or other type of IoT device) and the receiver 120 may be a device (e.g., an IoT gateway device at the customer premises, an IoT server in the network, or the like) configured to receive data from the IoT device and, further, the raw data 105 and the compressed data 115 may include various types of data which may be collected by the IoT device and used by the device configured to receive data from the IoT device (e.g., IoT device data (e.g., sensor data or other types of IoT data) such as raw IoT device data or processed IoT device data, management plane performance data (e.g., determined by the IoT device, derived at the IoT device from one or both of raw IoT device data or processed IoT device data, or the like), or the like, as well as various combinations thereof). In at least some such embodiments, sender 110 may be a device (e.g., an IoT gateway device at the customer premises, an IoT server in the network, or the like) configured to receive data from an IoT device and the receiver 120 may be a device (e.g., IoT server, management system, or the like) to which IoT device related data (e.g., IoT device data (e.g., sensor data or other types of IoT data) such as raw IoT device data or processed IoT device data, management plane performance data (e.g., determined by the IoT device, derived at the IoT device from one or both of raw IoT device data or processed IoT device data, or the like), or the like, as well as various combinations thereof) may be provided. It is noted that other arrangements are contemplated.

It is noted that, although primarily presented herein within the context of embodiments associated with cellular networks, the system 100 may be applied within various other communications contexts.

FIG. 2 depicts an example of a physical cellular communication system configured to support collection of management plane performance data.

The cellular communication system 200 may be any suitable type of cellular communication system based on any suitable type of cellular communication technology. For example, the cellular communication system 200 may be based on one or more of a Second Generation (2G) cellular technology, a Third Generation (3G) cellular technology, a Fourth Generation (4G) cellular technology, a Fifth Generation (5G) cellular technology, or the like. For example, the cellular communication system 200 may be a Global System for Mobile (GSM) system, a GSM EDGE Radio Access Network (GERAN) system, General Packet Radio Service (GRPS) system, Universal Mobile Telecommunication System (UMTS) based on wideband-code division multiple access (W-CDMA), a high-speed packet access (HSPA) system, Long Term Evolution (LTE) system, an LTE-Advanced (LTE-A) system, a Worldwide Interoperability for Microwave Access (WiMAX) system, a 5G New Radio (NR) (sometimes referred to simply as 5G) system, or the like. However, it is noted that various embodiments presented herein are primarily discussed within the context of LTE, LTE-A, and 5G cellular networks.

The cellular communication system 200, as is typically the case for many of the types of cellular networks listed above, is composed of cells provided by network elements. In the example of cellular communication system 200, a network element 202 provides or supports a cell 204, a network element 212 provides or supports a cell 214, and a network element 222 provides or supports a cell 224 It is noted that, while primarily presented to a case in which there is a one-to-one correspondence between network elements and cells provided by the network elements, a network element may provide more than one associated cell. For example, in at least some implementations, the network element 202 may provide two or more of cell 204, cell 214, and cell 224. Accordingly, more generally, the cellular communication system 200 may include one or more network elements 202, 212, 222, wherein each network element provides one or more cells 204, 214, 224 providing service to one or more terminal devices 210, 220, 230, 240 in the cells.

The network elements 202, 212, 222 may include any suitable type of network elements that may provide or support the cells 204, 214, and 224. The network element types may depend on the underlying cellular technology. For example, the network elements 202, 212, and 222 may be GSM or GERAN base station controllers (BSCs), UMTS radio network controllers (RNCs), LTE evolved Node Bs (eNodeBs), 5G base stations or controllers, access points, or other types of devices which may be capable of controlling radio communication and managing radio resources within a cell.

The cells 204, 214, 224 may be various types of cells which may be provided or supported by network elements 202, 212, and 222. For example, the cells may be macro cells, micro cells, femto cells, pico cells, or the like.

It is noted that the cells 214 and 224 may also be referred to as sub-cells or local area cells and, similarly, that the associated network elements 212 and 222 may be referred to as sub-network elements or local area access nodes.

The cells 204, 214, 224 may provide service for at least one terminal device 210, 220, 230, 240, wherein the at least one terminal device 210, 220, 230, 240 may be located within or comprised in at least one of the cells 204, 214, 224. The at least one terminal device 210, 220, 230, 240 may communicate with the network elements 202, 212, 222 using various communication link(s), which may be understood as communication link(s) for end-to-end communication, wherein source device transmits data to the destination device. It will be appreciated that the cells 204, 214, 224 may provide service for a certain area and, thus, that the at least one terminal device 210, 220, 230, 240 may need to be within that area in order to be able to use said service (horizontally and/or vertically). For example, a third terminal device 230 may be able to use service provided by the cells 204, 214, 224 while a fourth terminal device 240 may be able to use only service of the cell 204.

The cells 204, 214, 224 may be at least partially overlapping with each other and, thus, at least one terminal device 210, 220, 230, 240 may be enabled to use service of more than one cell at a time. For example, the sub-cells 214, 224 may be small cells that are associated with the macro cell 204. This may mean that the network element 202 (e.g., a macro network element) may at least partially control the network elements 212, 222 (e.g. local area access nodes). For example, the macro network element 202 may cause the local area access nodes 212, 222 to transmit data to the at least one terminal device 210, 220, 230, 240. It may also be possible to receive data, by the network element 202, from the at least one terminal device 210, 220, 230, 240 via the network elements 212, 222. To further explain the scenario, the cells 214, 224 may be at least partially within the cell 204.

The at least one terminal device 210, 220, 230, 240 is able to communicate with other similar devices via the network element 202 and/or the local area access nodes 212, 222. For example, a first terminal device 210 may transmit data via the network element 202 to a third terminal device 230. The other devices may be within the cell 204 and/or may be within other cells provided by other network elements. The at least one terminal device 210, 220, 230, 240 may be stationary or mobile.

The at least one terminal device 210, 220, 230, 240 may be an end user communication device (e.g., a mobile phone, a smartphone, a tablet computer, a laptop computer, or another device which may be used for user communications such as voice, video, data, or the like, as well as various combinations thereof), a Machine Type Communication (MTC) device (e.g., a sensor configured to provide sensor data (e.g., position, acceleration, temperature, or the like), an actuator, or the like), or the like, as well as various combinations thereof. It is also noted that there may be different types of network elements providing services to terminal device(s). For example, a home gateway/base station or a highway gateway/base station may be used in such systems to increase coverage and/or capacity. For example, the small network nodes 212, 222 (e.g. micro, nano, and/or femto cell providers) may be such gateways/base stations.

The network elements 202, 212, and 222 may be configured to support various types of communications therebetween. In the case of LTE or 5G networks, for example, in which the network elements 202, 212, 222 may be base stations or small base stations (e.g., eNBs), pairs of eNBs may be communicatively connected to each other via an Xx interface 280. For example, the Xx interface 280 between the network element 202 and the network element 212 may be an X2 interface as specified in LTE. It will be appreciated that, although omitted for purposes of clarity, other communication methods between the network elements also may be possible. For example, access points (APs) of a WLAN system may communicate with each other. In general, the network elements 202, 212, and 222 may be communicatively connected (wireless and/or wired) to each other using one or more circuitries. The Xx interface 280 is one example of how to realize such communication.

The network elements 202, 212, and 222 may be configured to support various types of communications to various elements of a core network. For example, one or more of the network elements 202, 212, 222 may be connected, via an S1 interface or any similar interface(s), to an evolved packet core and, more specifically, to a mobility management entity (MME) and to a system architecture evolution (SAE) gateway (SAE-GW). In the example of FIG. 2, the network element 202 is shown to be connected to a core network 290, which may be an evolved packet core or other suitable type of core network. In general, the network element 202, 212, 222 may be communicatively connected to the core network. For example, this may mean that the network element 202, 212, 222 may communicate with one or more NMSs or similar systems. Similarly, it may be possible that the one or more of the terminal device 210, 220, 230, 240 is communicatively connected to one or more NMSs or a similar system systems.

It will be appreciated that the cellular communication system 200 of FIG. 2 may be implemented in various other ways, may include fewer or more elements or entities, or the like, as well as various combinations thereof.

FIG. 3 depicts an example of a virtualized cellular communication system configured to support collection of management plane performance data.

The cellular communication system 300 is a virtualized implementation of the cellular communication system 200 of FIG. 2, with various functions of the cellular communication system 200 being virtualized. The cellular communication system 300 includes a set of one or more Virtual Network Functions (VNFs) 310, network function virtualization infrastructure 320, and NFV management and orchestration entity 330.

The VNFs 310 may be configured to provide virtualized versions of various cellular communication system functions. For example, the VNFs 310 may be virtualized versions of various cellular communication system functions, such as core network functions (e.g., EPC functions), radio network control functions (e.g., RNC functions), communication functions (e.g., routers, switches, or the like), cellular network service functions (e.g., firewall functions, antivirus functions, video optimizer functions, parental control functions, Internet Protocol Security (IPS), functions, of the like), or the like, as well as various combinations thereof. It will be appreciated that, while primarily presented with respect to a system in which all or most of the functions are virtualized, at least some of the functions may still be provided directly by physical entities. The VNFs 310 may utilize the virtual resources 321-323 to provide needed functionalities. Virtualization provides benefits, for example, as the virtual resources 321-323 may be scaled using the HW resources 325-327. For example, more hardware resources may be dynamically allocated for the virtual entities if a need arises. Similarly, hardware resources may be used for some other purpose when, for example, network load is lower.

The NFV management and orchestration entity 330 may be configured to control the VNFs 310. For example, the NFV management and orchestration entity 330 may create VNFs or control the manner in which different VNFs work. Additionally, the NFV management and orchestration entity 330 may control the virtualization of the HW resources 325-327 into the virtual resources 321-323 via the virtualization layer 324. Thus, for example, the NFV management and orchestration entity 330 may allocate further HW resources 325-227 to the virtual resources 321-323 if needed and available. The NFV management and orchestration entity 330 may be configured to provide various other functions.

It will be appreciated that the cellular communication system 300 of FIG. 3 may be implemented in various other ways, may include fewer or more elements or entities, or the like, as well as various combinations thereof.

With respect to FIG. 2 and FIG. 3, it is noted that both implementations of the cellular system utilize an NMS or NMS capabilities. In general, the NMS may refer to an entity or entities which may be configured to obtain management plane performance data from one or more devices of the system (e.g., network elements, terminal devices, or the like, as well as various combinations thereof). It will be appreciated that the management plane may be a sub-plane of the control plane (used for control signaling) which supports the data plane (used for user-related data). The management plane performance data, as discussed herein, may include performance indicators, which may be in the form of measurement data, counters, KPIs, or the like, as well as various combinations thereof. The performance indicators each may include one or more data points or values. The devices of the system may obtain the performance indicators (e.g., acquiring and/or measuring the performance indicators periodically, continuously, responsive to events or conditions, or the like) and provide the performance indicators to the NMS (e.g., periodically, continuously, responsive to events or conditions, or the like). In this manner, management plane performance data flows from various devices of the system to one or more NMSs of the system. Various improvements in the collection of management plane performance data within the context of such communication systems, for reducing the amount of management plane performance data that is transferred, are discussed further below.

It will be appreciated, referring again to FIG. 1, that the examples of FIG. 2 and FIG. 3 represent merely a few of the communication contexts within which system 100 of FIG. 1 may be applied for collection of management plane performance data.

The system 100 may be configured to improve or optimize collection of management plane performance data within a communication network. The system 100 may be configured to improve or optimize collection of management plane performance data based on automation of management (e.g., generation, modification, or the like, as well as various combinations thereof) of QoM classification models applied for controlling collection of management plane performance data. The system 100 may be configured to automate management of QoM classification models applied for controlling collection of management plane performance data based on use of various automation techniques (e.g., machine learning, data analysis, neural networks, or the like, as well as various combinations thereof). For example, the sender 110 and the receiver 120 may be configured to improve or optimize collection of management plane performance data based on use of automation techniques to manage the QoM classification model 113 that is applied by the QoM classification process 112 at the sender 110 in order to determine, from the raw data 105, the compressed data 115 that is provided to the receiver 120. It is noted that the use of automation techniques to manage the QoM classification models may include use of automation techniques to perform various functions which may be used for managing the QoM classification models (e.g., determination of managed object groupings, determination of KPI groupings, selection of QoM classification models, determination of the QoM classification model parameters, or the like, as well as combinations thereof). As discussed further below, the use of automation techniques to manage the QoM classification models may be applied at the sender 110, at the receiver 120, or a combination thereof.

In general, as discussed herein, the QoM classification models are configured to be applied for reducing the amount of M-plane data that is sent between sites, such as between local sites (e.g., where sender 110 and receiver 120 are different network elements), from local sites (e.g., sender 110, such as a network device) to a central site (e.g., receiver 120, such as an NMS), or the like. The QoM classification models, as discussed herein, may be applied for classifying portions of M-plane data as being significant or insignificant. The removal of insignificant portions of M-plane data at the certain sites (e.g., local sites) enables the amount of data collected and stored at other sites (e.g., a central site) to be significantly reduced.

In at least some embodiments, QoM classification models for classifying M-plane data as significant or insignificant can be organized as a hierarchy of QoM classes. The hierarchy of QoM classes may be organized in various ways. For example, the hierarchy of QoM classes may be organized in a chain of QoM classes such that each successive QoM class in the chain of QoM classes has a more relaxed definition of significant information in the data (e.g., when applied at the sender, each of them makes the sender omit less values than the previous QoM class in the chain). For example, a chain of QoM classes may be defined as follows: QoM Class 0 (if a portion of the data has non-zero subsequent changes in the values, the QoM classification model labels that portion of the data as significant, otherwise that portion of the data is labeled as insignificant; in other words, the QoM classification model considers all changes in the data as being significant while data having the same repeating subsequent values are considered to be insignificant), QoM Class 1 (if a portion of the data has subsequent changes in the value greater than or equal to its class sensitivity parameter (δ₁), the QoM classification model labels that portion of the data as significant, otherwise that portion of the data is labeled as insignificant), QoM Class 2 (if a portion of the data has subsequent changes in the value greater than or equal to its class sensitivity parameter (δ₂), the QoM classification model labels that portion of the data as significant, otherwise that portion of the data is labeled as insignificant), and so on, where *δᵢ₊₁ > δᵢ* > .... *δ₂ > δ₁.* Similarly, for example, the hierarchy of QoM classes may be organized in a chain of QoM classes such that each successive QoM class in the chain of QoM classes has a more stringent definition of significant information in the data (e.g., when applied at the sender, each of them makes the sender omit more values than the previous QoM class in the chain). In at least some embodiments, machine learning may be applied in order to learn the values for the class sensitivity parameters δ₁ used by the QoM classes. It will be appreciated that the hierarchy of QoM classes may be defined in other ways.

In at least some embodiments, the use of automation techniques to manage the QoM classification models may include learning (e.g., generation, adaptation, parameterization, or the like) of the QoM classification models for classifying portions of M-plane data as being significant or insignificant. In at least some embodiments, as discussed further below, global QoM classification models and/or local QoM classification models may be generated and adapted based on historical M-plane data which may be used as training data. It is noted that support for such as two-tiered system enables the network operator to decide which model to use for a given set of managed objects, thereby increasing flexibility and, thus, improving or optimizing reductions in management plane performance data that is collected.

In at least some embodiments, the use of automation techniques to manage the QoM classification models may include generation and adaptation of global QoM classification models. These machine-learned QoM classification models may be created by a global agent (e.g., receiver 120, one or more entities associated with receiver 120, or the like, as well as various combinations thereof) which has access to the global database of M-plane data (e.g., database 121 associated with receiver 120). The global agent may use M-plane data of all of the managed objects in the network, a subset of the managed objects in the network (but perhaps more managed objects than the set of managed objects associated with the source(s) for which the QoM classification model(s) is/are being create), or the like. Various subsets of such QoM classification models could be made for groups of managed objects which are behaving similarly. The generation and adaptation of global QoM classification models may be performed in various other ways, as discussed further herein.

In at least some embodiments, the use of automation techniques to manage the QoM classification models may include generation and adaptation of local QoM classification models. These machine-learned QoM classification models may be created either locally at the local agent which collects M-plane data from the managed objects (e.g., sender 110) based on a local database of M-plane data (e.g., database 111 associated with sender 110) or globally by a global agent (e.g., receiver 120, one or more entities associated with receiver 120, or the like, as well as various combinations thereof) on behalf of a local agent based on the global database of M-plane data (e.g., database 121 associated with receiver 120). The generation and adaptation of local QoM classification models may be performed in various other ways, as discussed further herein.

In at least some embodiments, the use of automation techniques to manage the QoM classification models may include a combination of use of automation techniques for generation and adaptation of global QoM classification models and use of automation techniques for generation and adaptation of local QoM classification models.

In at least some embodiments, the operator may have flexibility to select the QoM classification models to be used. This decision could, for example, be based on features and behavior of the managed objects or other factors.

As discussed herein, there are at least three different points in the QoM classification model management process at which automation techniques may be applied for managing the QoM classification models.

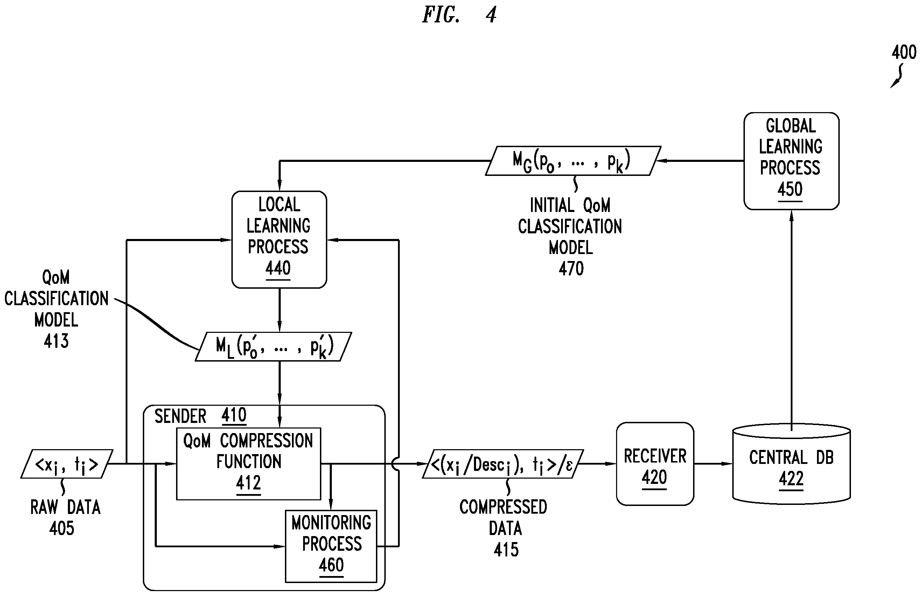

FIG. 4 depicts a data collection system for illustrating points within a QoM classification model management process at which automation techniques may be applied for automating management of a QoM classification model.

In FIG. 4, the data collection system includes three points involved in the QoM classification model management process. The three points include two learning points (illustratively, a receiver learning point and a sender learning point) and one monitoring point (illustratively, associated with the sender) associated with the QoM compression process that applies the QoM classification model that is managed by the QoM classification model management process.

In FIG. 4, the QoM classification model management process, for generating a QoM classification model which may be applied to actual, element specific, KPI time series, includes three general steps as follows: (1) setup of the QoM class definitions for the QoM classes and QoM classification models of the QoM classes, (2) selection of the QoM class and QoM classification model for each KPI time series of the element, and (3) adaptation of QoM classification model parameters of the QoM classification model to optimize QoM compression behavior for each KPI time series generated by the element. In at least some embodiments, the first two steps are performed by the receiver learning point as the receiver learning point has an overall view of the network (e.g., for making QoM class and QoM classification model selections (e.g., for homogenous elements and their KPI groups)) and the third step is performed by the sender learning point (e.g., for adapting the QoM classification model parameters of the selected QoM classification models according to given QoM class requirements to optimize the compression of actual, element specific, KPI time series).

In FIG. 4, raw data 405 (denoted as <xᵢ, tᵢ>) is processed at a sender 410 to provide compressed data 415 (denoted as <(xᵢ / Descᵢ), tᵢ> / ε) that is provided by the sender 410 to a receiver 420. The sender 410 processes the raw data 405 using a QoM compression function 412 based on a QoM classification model 413 to provide the compressed data 415. The receiver 420 stores the compressed data 415 in a central database (DB) 422.

In FIG. 4, various automation techniques may be applied in order to automate QoM classification model generation functions. The automation of QoM classification model generation functions may be based on various criteria that may be used to guide QoM classification model generation functions. The criteria may include pre-defined thresholds for the KPIs that describe efficiency and quality of the collection process performance and transferred data, which may be provided as an annotated (e.g., analyzed and labeled) training data that can be used as a training data for machine learning tasks. In FIG. 4, automation of QoM classification model generation functions may be supported by a local learning process 440, a global learning process 450, or a combination thereof.

In FIG. 4, automation of QoM classification model generation functions may be supported by the local learning process 440. The local learning process 440 may be executed at a sender site at which the sender 410 is located or at any other suitable site. The local learning process 440 may be configured to generate the QoM classification model 413. The QoM classification model 413 includes a set of QoM classification model parameters (denoted as M_{L}(p'₀,...,p'ₖ), where the "L" indicates that the QoM classification model 413 is a local QoM classification model for the sender 410 and that the QoM classification model parameters are "local" parameters for the sender 410). It will be appreciated that the set of QoM classification model parameters M_{L} may include one or more parameters. The QoM classification model 413 may be generated by the local learning process 440 based on the raw data 405. The QoM classification model 413 may be generated by the local learning process 440 based on an initial QoM classification model 470, which may be provided to the local learning process 440 by the receiver 420 or another suitable source. The initial QoM classification model 470 includes a set of initial QoM classification model parameters (denoted as M_{G}(p₀,...,pₖ), where the "G" indicates that the initial QoM classification model parameters are "global" parameters provided to the sender 110 which may then be further refined to determine the QoM classification model parameters M_{L}(p'₀,... ,p'ₖ) of the QoM classification model 413 for the sender 410). It will be appreciated that the set of initial QoM classification model parameters M_{G} may include one or more parameters. The local learning process 440 modifies the set of initial QoM classification model parameters to determine the set of QoM classification model parameters M_{L}(p'₀,...,p'ₖ) and, thus, to determine the QoM classification model 413 applied by the QoM compression function 412 to provide the compressed data 415. The set of QoM classification model parameters may be determined such that an optimal compression ratio is achieved within the limits given in the initial QoM classification model 470. It is noted that, although omitted from FIG. 4 for purposes of clarity, in at least some embodiments the QoM classification model 413 may be fully determined by the global learning process 450 and provided by the global learning process 450 for use by the QoM compression function 412 at the sender 410 (e.g., provided to the local learning process 440 where the local learning process 440 is available, provided to the sender 410, or the like).

In FIG. 4, automation of QoM classification model generation functions may be supported by the global learning process 450. The global learning process 450 may be executed at a receiver site at which the receiver 420 is located or at any other suitable site. The global learning process 450 may be configured to generate the initial QoM classification model 470, which may be provided to the local learning process 440 by the receiver 420 or another suitable source. The initial QoM classification model 470, as noted above, includes the set of initial QoM classification model parameters M_{G}(p₀,...,pₖ). The global learning process 450 provides the initial QoM classification model 470 for use by the local learning process 440 to determine the set of QoM classification model parameters M_{L}(p'₀,...,p'ₖ) and, thus, to determine the QoM classification model 413 applied by the QoM compression function 412 to provide the compressed data 415. It is noted that, although omitted from FIG. 4 for purposes of clarity, in at least some embodiments the QoM classification model 413 may be fully determined by the global learning process 450 and provided by the global learning process 450 for use by the QoM compression function 412 at the sender 410 (e.g., provided to the local learning process 440 where the local learning process 440 is available, provided to the sender 410, or the like).

In FIG. 4, automation of QoM classification model generation functions may be supported by a monitoring process 460. In FIG. 4, the QoM compression function 412 is continuously monitored and analyzed by the monitoring process 460 for determining whether to modify the QoM classification model 413. It is noted that, as network performance may evolve constantly then, if an automated function is allowed to run long enough, the automated function might end up in an unexpected and potentially undesirable state if its performance and outcome is not monitored and adjusted. For example, in the case of a cellular network, as the network evolves, cell surroundings develop, and subscribers change their services and behavior, the statistical properties of the KPI time series also change. As a result, in order to guarantee the information content of the KPI time series, the monitoring process 460 may be used to monitor and analyze the QoM compression function 412, including the QoM classification model 413 and the parameters of the QoM classification model 413, in a manner tending to ensure that unexpected and undesirable states of the QoM compression function 412 can be avoided. The monitoring function 460 may be configured to control modification of the QoM classification model 413 based on the results of the continuous monitoring and analysis of the QoM compression function 412. The monitoring function 460, based on a determination that adaptation of the QoM classification model 413 may be necessary or desirable, may initiate modification of the QoM classification model 413 (e.g., adaptation/retraining of the QoM classification model parameters of the QoM classification model 413, selection of a new QoM classification model to be used as QoM classification model 413 (which also may include adaptation/retraining of the QoM classification model parameters of the new QoM classification model), or the like).

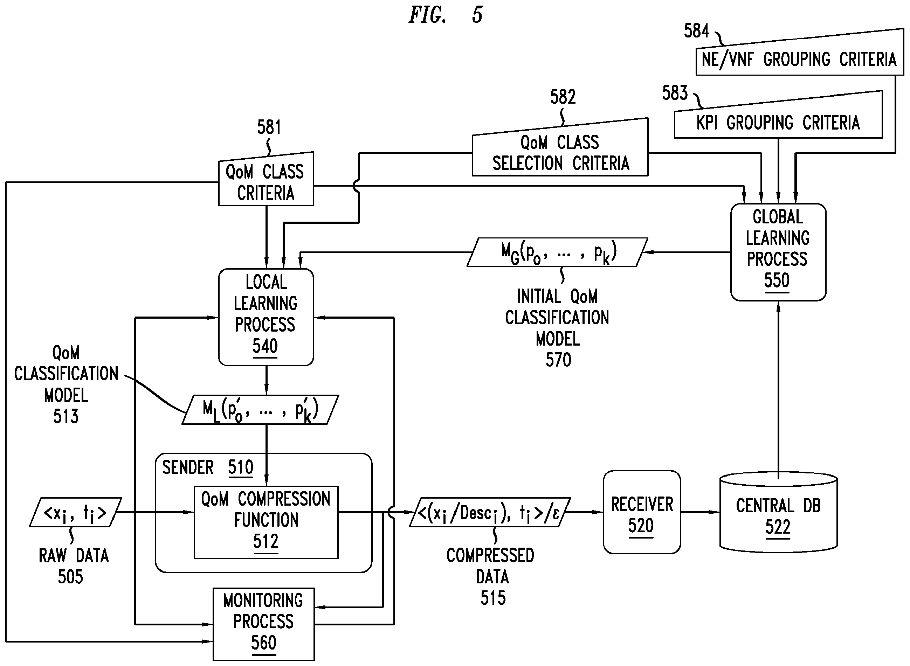

FIG. 5 depicts embodiments for automation of QoM classification model generation functions.

In FIG. 5, raw data 505 (denoted as <xᵢ, tᵢ>) is processed at a sender 510 to provide compressed data 515 (denoted as <(xᵢ / Descᵢ), tᵢ> / ε) that is provided by the sender 510 to a receiver 520. The sender 510 processes the raw data 505 using a QoM compression function 512 based on a QoM classification model 513 to provide the compressed data 515. The receiver 520 stores the compressed data 515 in a central database (DB) 522.

In FIG. 5, various machine learning capabilities may be applied in order to automate QoM classification model generation functions. The automation of QoM classification model generation functions may be based on various criteria that may be used to guide QoM classification model generation functions. The criteria may include pre-defined thresholds for the KPIs that describe efficiency and quality of the collection process performance and transferred data, which may be provided as an annotated (e.g., analyzed and labeled) training data that can be used as a training data for machine learning tasks. In FIG. 5, automation of QoM classification model generation functions may be supported by a local learning process 540, a global learning process 550, or a combination thereof.

In FIG. 5, automation of QoM classification model generation functions may be supported by the local learning process 540. The local learning process 540 may be executed at a sender site at which the sender 510 is located or at any other suitable site. The local learning process 540 may be configured to generate the QoM classification model 513. The QoM classification model 513 includes a set of QoM classification model parameters (denoted as M_{L}(p'₀,... ,p'ₖ)). The QoM classification model 513 may be generated by the local learning process 540 in various ways.

The QoM classification model 513, as noted above, may be generated by the local learning process 540 in various ways. The QoM classification model 513 may be generated based on various combinations of input information. The QoM classification model 513 may be generated by the local learning process 540 based on the raw data 505. The QoM classification model 513 may be generated based on network element / virtualized network function (NE/VNF) grouping criteria 584, KPI grouping criteria 583, QoM class selection criteria 582, QoM class criteria 581, or the like, as well as various combinations thereof. The NE/VNF grouping criteria 584 is configured for use in determining NE/VNF groups. For example, the NE/VNF grouping criteria 584 may include a definition of criteria configured for use in mapping NEs/VNFs to homogenous groups. The KPI grouping criteria 583 may be configured for use in determining groups of KPIs. For example, the KPI grouping criteria 583 may include statistical properties and definitions configured for use in finding homogenous KPI groups. The QoM class selection criteria 582 may be configured for use in selecting a QoM class to be used, selecting an initial QoM classification model including a set of QoM classification model parameters, or the like, as well as various combinations thereof. The QoM class criteria 581 may be configured for use in determining a set of QoM classification model parameters of a QoM classification model, for use in adapting a set of initial QoM classification model parameters of an initial QoM classification model to provide a set of local QoM classification model parameters for a local QoM classification model, or the like, as well as various combinations thereof. For example, the QoM class criteria 581 may include information such as confidence limits, absolute/relative error, consecutive deviation percentiles, or the like, as well as various combinations thereof). The QoM classification model 513 may be generated by the local learning process 540, by the local learning process 540 in conjunction with the global learning process 550, or the like. The QoM classification model 513 may be generated by the local learning process 540 without an initial QoM classification model being provided from the global learning process 550 to the local learning process 540 (omitted from FIG. 5) or based on an initial QoM classification model being provided from the global learning process 550 to the local learning process 540 (illustratively, initial QoM classification model 570 is provided from the global learning process 550 to the local learning process 540).

The QoM classification model 513 may be generated by the local learning process 540 without an initial QoM classification model being provided from the global learning process 550 to the local learning process 540 (again, omitted from FIG. 5). The QoM classification model 513 may be generated by the local learning process 540 based on the QoM class selection criteria 582 (which may be provided to the local learning process 540 by the receiver 520 or another suitable source), the QoM class criteria 581 (which may be provided to the local learning process 540 by the receiver 520 or another suitable source), and the raw data 505. The QoM classification model 513 may be generated by the local learning process 540 by (1) selecting an initial QoM classification model (such as initial QoM classification model 570, where it is not provided by the global learning process 550), based on the QoM class selection criteria 582, having a set of initial QoM classification model parameters (where the selecting of the initial QoM classification model may include selecting a QoM class based on the QoM class selection criteria 582 and selecting the initial QoM classification model from a set of initial QoM classification models associated with the selected QoM class) and (2) adapting the set of initial QoM classification model parameters, based on the QoM class criteria 581 and the raw data 505, to provide thereby the QoM classification model 513. The result is the QoM classification model 513 which is applied by the QoM compression function 512 to provide the compressed data 515 based on the raw data 505.

The QoM classification model 513 may be generated by the local learning process 540 using an initial QoM classification model provided from the global learning process 550 to the local learning process 540 (illustratively, initial QoM classification model 570, which is depicted as being provided from the global learning process 550 to the local learning process 540). The initial QoM classification model 570 includes a set of initial QoM classification model parameters (denoted as M_{G}(p₀,... ,pₖ)). The local learning process 540 modifies the set of initial QoM classification model parameters M_{G}(p₀,...,pₖ), based on the QoM class criteria 581 and the raw data 505, to determine the set of QoM classification model parameters M_{L}(p'₀,...,p'ₖ) and, thus, to determine the QoM classification model 513. The result is the QoM classification model 513 which is applied by the QoM compression function 512 to provide the compressed data 515 based on the raw data 505.

The QoM classification model 513, as discussed above, includes a set of QoM classification model parameters M_{L}(p'₀,...,p'ₖ). The set of QoM classification model parameters M_{L}(p'₀,...,p'ₖ) may be determined such that an optimal compression ratio is achieved within the limits given in the QoM class criteria 581 of the initial QoM classification model 570.

In FIG. 5, automation of QoM classification model generation functions may be supported by the global learning process 550. The global learning process 550 may be executed at a receiver site at which the receiver 520 is located or at any other suitable site. The global learning process 550 may be configured to generate the initial QoM classification model 570, which may be provided to the local learning process 540 for use in generating the QoM classification model 513. The initial QoM classification model 570 may be generated based on the NE/VNF grouping criteria 584, the KPI grouping criteria 583, the QoM class selection criteria 582, and the QoM class criteria 581. The initial QoM classification model 570, as noted above, includes the set of initial QoM classification model parameters M_{G}(p₀,...,pₖ). The global learning process 550 provides the initial QoM classification model 570 for use by the local learning process 540 to determine the set of QoM classification model parameters M_{L}(p'₀,...,p'ₖ) and, thus, to determine the QoM classification model 513 applied by the QoM compression function 512 to provide the compressed data 515.

It is noted that, in at least some embodiments, the QoM classification model 513 may be fully determined by the global learning process 550 and provided by the global learning process 550 for use by the QoM compression function 512 at the sender 510 (e.g., provided to the local learning process 540 where the local learning process 540 is available, provided to the sender 510, or the like).

In FIG. 5, automation of QoM classification model generation functions may be supported by a monitoring process 560.

In FIG. 5, the QoM compression function 512 is continuously monitored and analyzed by the monitoring process 560 for determining whether to modify the QoM classification model 513. It is noted that, as network performance may evolve constantly then, if an automated function is allowed to run long enough, the automated function might end up in an unexpected and potentially undesirable state if its performance and outcome is not monitored and adjusted. For example, in the case of a cellular network, as the network evolves, cell surroundings develop, and subscribers change their services and behavior, the statistical properties of the KPI time series also change. As a result, in order to guarantee the information content of the KPI time series, the monitoring process 560 may be used to monitor and analyze the QoM compression function 512, including the QoM classification model 513 and the parameters of the QoM classification model 513, in a manner tending to ensure that unexpected and undesirable states of the QoM compression function 512 can be avoided.

The monitoring function 560 may be configured to perform monitoring and analysis of the QoM compression function 512 and the associated QoM classification model 513 based on various types of input information. The monitoring function 560 may be configured to perform monitoring and analysis of the QoM compression function 512 and the associated QoM classification model 513 based on the raw data 505, the compressed data 515, and the QoM class criteria 581. As discussed further below, if the monitoring function 560 detects violation of requirements applied to the QoM class attached to the KPI time series, it can force re-adaptation of the associated QoM classification model 513. It is noted that, in at least some embodiments, the associated network operator may have the option to check and reset definitions of the QoM classification models that are learned based on machine learning (e.g., based on an interface with the network operator, via which the network operator can receive definitions of the QoM classification models and via which the network operator can initiate resetting of QoM classification models based on determinations that the QoM classification models are outdated or otherwise inappropriate.

The monitoring function 560 may be configured to control modification of the QoM classification model 513 based on the results of the continuous monitoring and analysis of the QoM compression function 512. The monitoring function 560, based on a determination that the QoM class criteria 581 are satisfied, may not initiate any action (e.g., modification of the QoM classification model 513 is not needed). The monitoring function 560, based on a determination that the QoM class criteria 581 are not satisfied, may initiate modification of the QoM classification model 513 (e.g., by providing a control message to the QoM classification model generation process 540 and/or to one or more other control elements). The modification of the QoM classification model 513 may include adaptation/retraining of the QoM classification model parameters of the QoM classification model 513, selection of a new QoM classification model to be used as QoM classification model 513 (which also may include adaptation/retraining of the QoM classification model parameters of the new QoM classification model), or the like.

The monitoring function 560 may be configured to report the results of the continuous monitoring and analysis of the QoM compression function 512. The monitoring function 560 may be configured to report the results of the continuous monitoring and analysis of the QoM compression function 512 to the network operator. The results may be reported to one or more management systems of the network operator. The results may be reported to the network operator in other ways. The results may be reported periodically, responsive to detection of a condition (e.g., a determination that the QoM class criteria 581 are not satisfied), or the like, as well as various combinations thereof. The monitoring function 560 may provide an interface to the network operator (e.g., to one or more management systems of the network operator) to enable the network operator to trigger modification of the QoM classification model 513 based on the reporting of the continuous monitoring and analysis of the QoM compression function 512 to the network operator.

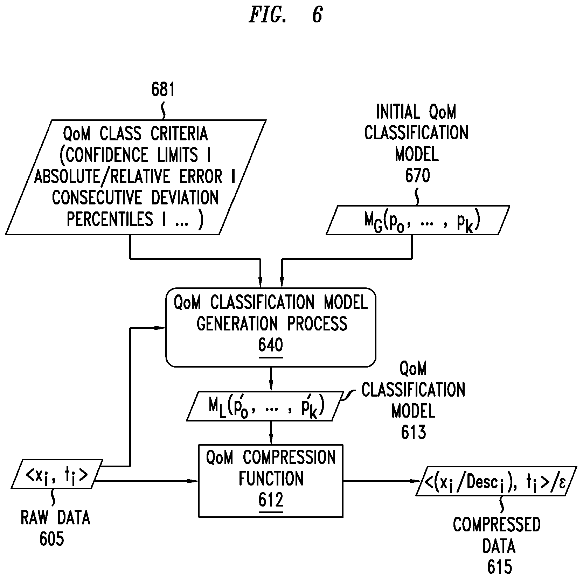

FIG. 6 depicts an embodiment for automation of the QoM classification model selection and adaptation functions in the local learning phase.

In FIG. 6, raw data 605 (denoted as <xi, tᵢ>) is processed by a QoM compression function 612 based on a QoM classification model 613 to provide compressed data 615 (denoted as <(xᵢ / Descᵢ), tᵢ> / ε). The QoM compression function 612 may be executed by the sender at the sender site.

The QoM classification model 613 is generated by a QoM classification model generation process 640. The QoM classification model 613 includes a set of QoM classification model parameters (denoted as M_{L}(p'₀,... ,p'ₖ)). The QoM classification model generation process 640 is executed at the sender site. The QoM classification model 613 is generated by the QoM classification model generation process 640 based on the raw data 605, QoM class criteria 681, and an initial QoM classification model 670. The QoM class criteria 681 may be received from the receiver site or another suitable source. The QoM class criteria 681 includes information such as confidence limits, absolute/relative error, consecutive deviation percentiles, or the like, as well as various combinations thereof. The initial QoM classification model 670 may be received from the receiver site or another suitable source. The initial QoM classification model 670 includes a set of initial QoM classification model parameters (denoted as M_{G}(p₀,...,pₖ)). The QoM classification model generation process 640 modifies the set of initial QoM classification model parameters M_{G}(p₀,...,pₖ), based on the raw data 605 and the QoM class criteria 681, to determine the set of QoM classification model parameters M_{L}(p'₀,...,p'ₖ) and, thus, to determine the QoM classification model 613 applied by the QoM compression function 612 to provide the compressed data 615. The set of QoM classification model parameters M_{L}(p'₀,...,p'ₖ)) may be determined by analyzing the local data stream, based on application of the initial QoM classification model 670, to learn the set of QoM classification model parameters M_{L}(p'₀,...,p'ₖ) that improve or optimize the QoM class criteria 681. The set of QoM classification model parameters M_{L}(p'₀,...,p'ₖ) may be determined such that an optimal compression ratio is achieved within the limits given in the QoM class criteria 681. It is noted that the limits can be defined in various ways depending on the statistical properties of the time series and its semantics.

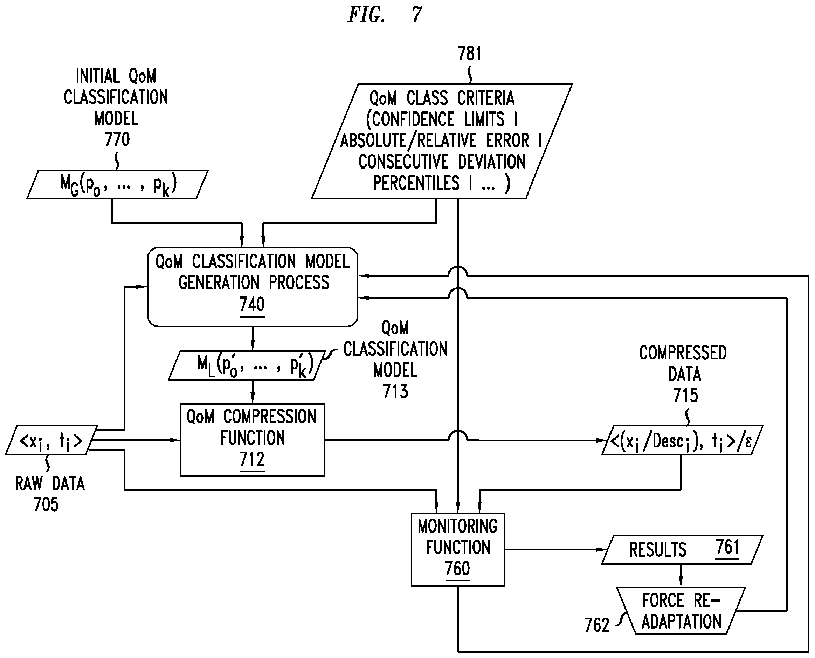

FIG. 7 depicts an embodiment for continuous monitoring and analysis of a QoM compression function performing data selection based on a QoM classification model.

In FIG. 7, raw data 705 (denoted as <xᵢ, tᵢ>) is processed by a QoM compression function 712 based on a QoM classification model 713 to provide compressed data 715 (denoted as <(xᵢ / Descᵢ), tᵢ> / ε). The QoM compression function 712 may be executed by the sender at the sender site.

In FIG. 7, the QoM compression function 712 is continuously monitored and analyzed for determining whether to modify the QoM classification model 713. It is noted that, as network performance may evolve constantly then, if an automated function is allowed to run long enough, the automated function might end up in an unexpected and potentially undesirable state if its performance and outcome is not monitored and adjusted. The monitoring and analysis of the QoM compression function 712 supports modification of the QoM classification model 713 in a manner tending to ensure that unexpected and undesirable states of the QoM compression function 712 can be avoided.

The QoM classification model 713 is generated by a QoM classification model generation process 740. The QoM classification model 713 includes a set of QoM classification model parameters (denoted as M_{L}(p'₀,. . .,p'ₖ)). The QoM classification model generation process 740 may be executed at the sender site, the receiver site, or a combination thereof. The QoM classification model 713 is generated by the QoM classification model generation process 740 based on the raw data 705, QoM class criteria 781, and an initial QoM classification model 770. The QoM class criteria 781 may be provided by the receiver site or another suitable source. The QoM class criteria 781 includes information such as confidence limits, absolute/relative error, consecutive deviation percentiles, or the like, as well as various combinations thereof). The initial QoM classification model 770 may be provided by the receiver site or another suitable source. The initial QoM classification model 770 includes a set of initial QoM classification model parameters (denoted as M_{G}(p₀,...,pₖ)). The QoM classification model generation process 740 modifies the set of initial QoM classification model parameters M_{G}(p₀,...,pₖ), based on the raw data 705 and the QoM class criteria 781, to determine the set of QoM classification model parameters M_{L}(p'₀,...,p'ₖ) and, thus, to determine the QoM classification model 713 applied by the QoM compression function 712 to provide the compressed data 715. The set of QoM classification model parameters M_{L}(p'₀,...,p'ₖ) may be determined such that an optimal compression ratio is achieved within the limits given in the QoM class criteria 781 of the initial QoM classification model 770. It is noted that the limits can be defined in various ways depending on the statistical properties of the time series and its semantics.

The QoM compression function 712 is continuously monitored and analyzed for determining whether the QoM classification model 713 is to be modified (e.g., retrained). The QoM compression function 712 is continuously monitored and analyzed by a monitoring function 760. The monitoring function 760 may be executed at the sender site, the receiver site, or a combination thereof. The monitoring function 760 performs continuous monitoring and analysis of the QoM compression function 712 for determining whether the QoM classification model 713 is to be modified based on the raw data 705, the compressed data 715, and the QoM class criteria 781. The monitoring function 760, based on the raw data 705 and the compressed data 715 as well as the QoM class criteria 781, is able to determine whether the compressed data 715 output by the QoM compression function 712 based on analysis of the raw data 705 using the QoM classification model 713 satisfies the QoM class criteria 781. The monitoring function 760 may be configured to perform various control functions.

The monitoring function 760 may be configured to control modification of the QoM classification model 713 based on the results of the continuous monitoring and analysis of the QoM compression function 712 (as illustrated by the control loop from the monitoring function 760 to the QoM classification mode generation process 740). The monitoring function 760, based on a determination that the QoM class criteria 781 are satisfied, may not initiate any action (e.g., modification of the QoM classification model 713 is not needed). The monitoring function 760, based on a determination that the QoM class criteria 781 are not satisfied, may initiate modification of the QoM classification model 713 (e.g., by providing a control message to the QoM classification model generation process 740 and/or to one or more other control elements). The modification of the QoM classification model 713 may include adaptation/retraining of the QoM classification model parameters of the QoM classification model 713, selection of a new QoM classification model to be used as QoM classification model 713 (which also may include adaptation/retraining of the QoM classification model parameters of the new QoM classification model), or the like.

The monitoring function 760 may be configured to report the results of the continuous monitoring and analysis of the QoM compression function 712. This is illustrated as results 761. The monitoring function 760 may be configured to report the results 761 of the continuous monitoring and analysis of the QoM compression function 712 to the network operator. The results 761 may be reported to one or more management systems of the network operator. The results 761 may be reported to the network operator in other ways. The results 761 may be reported periodically, responsive to detection of a condition (e.g., a determination that the QoM class criteria 781 are not satisfied), or the like, as well as various combinations thereof. The monitoring function 760 may provide an interface to the network operator (e.g., to one or more management systems of the network operator) to enable the network operator to trigger modification of the QoM classification model 713 based on the reporting of the continuous monitoring and analysis of the QoM compression function 712 to the network operator (illustrated as force re-adaptation 762 associated with a control loop from the network operator to the QoM classification model generation process 740.

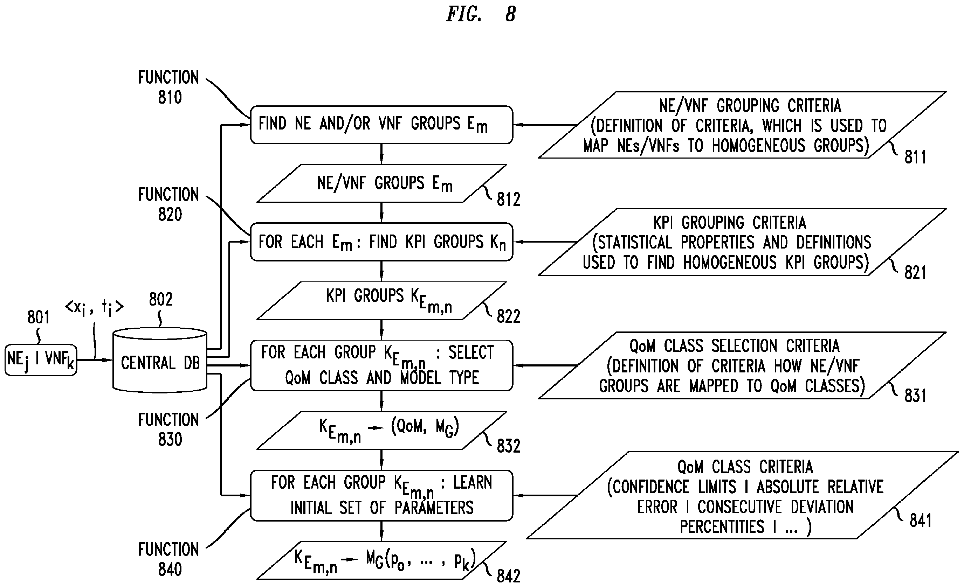

FIG. 8 depicts an embodiment for automation of the QoM classification model selection and adaptation functions in the global learning phase.

In FIG. 8, an NE or VNF 801 (denoted as NEⱼ or VNFₖ) provided data (denoted as <xᵢ, tᵢ>) that is stored in a central DB 802. The data, as discussed further below, may then be used as input to the QoM classification model selection and adaptation functions.

The QoM classification model selection and adaptation functions include a function 810 for finding NE and/or VNF groups (denoted as Eₘ). The function 810 takes as input NE/VNF grouping criteria 811 and data from the central DB 802 and outputs the NE and/or VNF groups 812 (again, denoted as NE and/or VNF groups Eₘ). The NE/VNF grouping criteria 811 includes a definition of criteria configured for use in mapping NEs/VNFs to homogenous groups.

The QoM classification model selection and adaptation functions include a function 820 for finding, for each of the NE and/or VNF groups Eₘ, a respective set of KPI groups (denoted as Kₙ for the respective NE and/or VNF groups Eₘ). The function 820 takes as input the NE and/or VNF groups 812 from the function 810, KPI grouping criteria 821, and data from the central DB 802, and outputs the KPI groups 822 for the respective NE and/or VNF groups Eₘ (denoted as KPI groups K_{Em,n} for the various NE and/or VNF groups Eₘ). The KPI grouping criteria 821 includes statistical properties and definitions configured for use in finding homogenous KPI groups.

The QoM classification model selection and adaptation functions include a function 830 for finding, for each of the KPI groups K_{Em,n} for the various NE and/or VNF groups Eₘ, a respective QoM class and QoM classification model type (denoted as (QoM_{c}, M_{G})). The function 830 takes as input the KPI groups 822 from the function 820, QoM class selection criteria 831, and data from the central DB 802, and outputs the QoM classes and QoM classification model types 832 for the respective KPI groups 832 (denoted as K_{Em,n} →(QoM_{c}, M_{G}) for the various KPI groups K_{Em,n} for the various NE and/or VNF groups Eₘ). The QoM class selection criteria 831 includes definitions of criteria of how the KPI groups K_{Em,n} for the various NE and/or VNF groups Eₘ are mapped to QoM classes.

The QoM classification model selection and adaptation functions include a function 840 for finding, for each of the KPI groups K_{Em,n} for the various NE and/or VNF groups Eₘ, a respective set of initial QoM classification model parameters (denoted as (QoM_{c}, M_{G}(p₀,...,pₖ)). The function 840 takes as input the QoM classes and QoM classification model types 832 from the function 830, QoM class criteria 841, and data from the central DB 802, and outputs the sets of initial QoM classification model parameters 842 for the respective KPI groups 832 (denoted as K_{Em,n} →(QoM_{c}, M_{G}(p₀,...,pₖ)) for the various KPI groups K_{Em,n} for the various NE and/or VNF groups Eₘ). The QoM class criteria 841 includes information such as confidence limits, absolute/relative error, consecutive deviation percentiles, or the like, as well as various combinations thereof).

It will be appreciated that, although primarily presented herein as being performed serially, at least a portion of the functions FIG. 8 may be performed contemporaneously or in a different order than as presented in FIG. 8 (e.g., finding the KPI groups before finding the NE/VNF groups).

It will be appreciated that a significant difference between the local learning phase of FIG. 6 and the global learning phase of FIG. 8 is that in the local learning phase only individual NEs/VNFs and their KPI time series may be handled, whereas in the global learning phase the QoM classes and QoM classification models are selected for groups of NEs/VNFs.

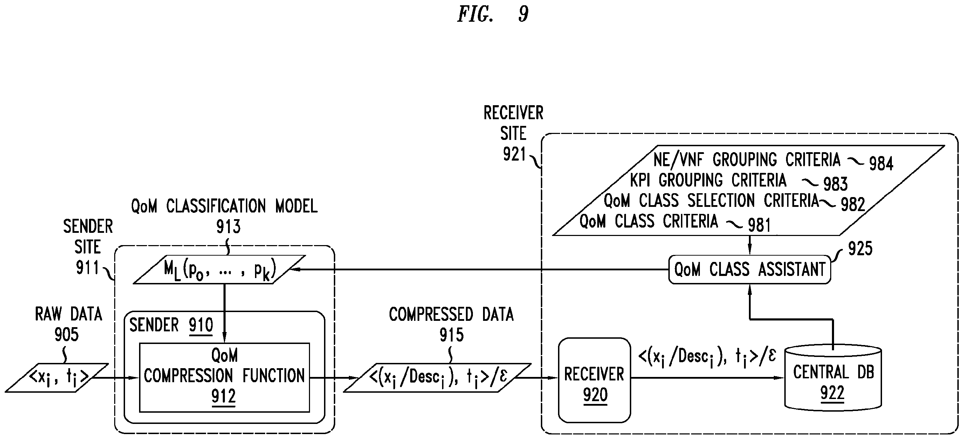

As discussed herein, the use of automation techniques for generation of QoM classification models for classifying data as significant or insignificant may be implemented in various ways in terms of where automation is applied (e.g., at the location of the receiver, at the location of the sender, or a combination thereof). Some embodiments for implementation of automation techniques for generation of QoM classification models are presented below with respect to FIGs. 9 - 13. It is noted that the implementation that is ultimately used may be based on various factors (e.g., characteristics of the data to be compressed, the capabilities of the sender or other elements at the sender site, the capabilities of the receiver or other elements at the receiver site, or the like, as well as various combinations thereof).

FIG. 9 depicts an embodiment of the data collection control capability in which learning of the QoM classification model based on automation techniques is performed at the receiver site. In FIG. 9, a sender 910 is located at a sender site 911 (e.g., a Mobile Edge Computing (MEC) environment or the like) and a receiver 920 is located at a receiver site 921 (e.g., a central cloud). The sender 910 at the sender site 911 selects, from raw data 905, compressed data 915 that is provided to the receiver 920 at the receiver site 921. The sender 910 at the sender site 911 selects the compressed data 915 based on a QoM classification model 913 (denoted as M_{L}(p₀,...,pₖ)) using a QoM compression function 912. The QoM classification model 913 that is used by the sender 910 to select the compressed data 915 is learned at the receiver site 921 and provided to the sender site 911. The QoM classification model 913 is determined at the receiver site 921 from global data in a central DB 922 at the receiver site 921. The QoM classification model 913 is determined at the receiver site 921 by a QoM class assistant 925 based on NE/VNF grouping criteria 984, KPI grouping criteria 983, QoM class selection criteria 982, and the QoM class criteria 981. The QoM class assistant 925 may learn the QoM classification model 913 using the process presented with respect to FIG. 8. The QoM classification model 913 learned at the receiver site 921 is then provided from the receiver site 921 to the sender site 911 for use by the sender 910.

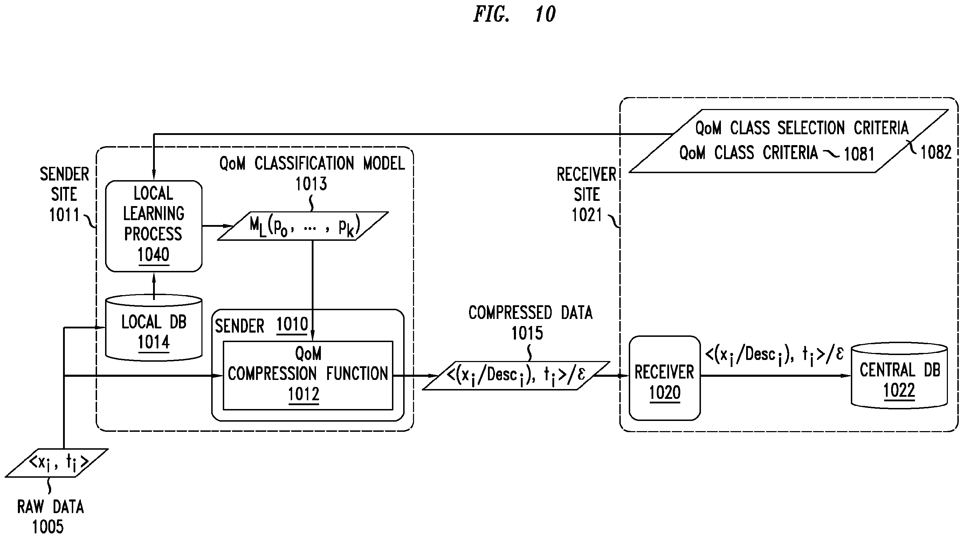

FIG. 10 depicts an embodiment of the data collection control capability in which learning of the QoM classification model based on automation techniques is performed at the sender site for a given training period. In FIG. 10, a sender 1010 is located at a sender site 1011 (e.g., a MEC environment or the like) and a receiver 1020 is located at a receiver site 1021 (e.g., a central cloud). The sender 1010 at the sender site 1011 selects, from raw data 1005 at the sender site 1011, compressed data 1015 that is provided to the receiver 1020 at the receiver site 1021. The sender 1010 at the sender site 1011 selects the compressed data 1015 based on a QoM classification model 1013 (denoted as M_{L}(p₀,...,pₖ)) using a QoM compression function 1012. The QoM classification model 1013 that is used by the sender 1010 to select the compressed data 1015 is learned at the sender site 1011. The sender site 1011 is assisted with learning the QoM classification model 1013 based on QoM criteria received by the sender site 1011 from the receiver site 1021. The QoM criteria received by the sender site 1011 from the receiver site 1021 includes QoM class criteria 1081 and QoM class selection criteria 1082. For example, the QoM criteria may include mappings of QoM class sensitivity parameters to n-th percentiles of absolute consecutive deviation or other types of QoM class selection criteria or QoM class criteria. The QoM criteria received by the sender site 1011 from the receiver site 1021 may be considered to provide a skeleton of the QoM classification model 1013 that is ultimately learned at the sender site 1011. The receiver site 1021 also may provide the sender site 1011 with the length of the given training period that is to be used at the sender site 1011 for learning the QoM classification model 1013. The QoM classification model 1013 learned at the sender site 1011 is learned at the sender site 1011 by a local learning process 1040 based on the QoM criteria from the receiver site 1021 and the raw data 1005 that is processed by the sender 1010 based on the QoM classification model 1013 in order to select the compressed data 1015 that is provided to the receiver 1020 (where the raw data 1005 may be obtained by the local learning process 1040 from a local database 1014 that stores the raw data 1005). The local learning process 1040 may learn the QoM classification model 1013 by (1) selecting an initial QoM classification model, based on the QoM class selection criteria 1082, having initial QoM classification model parameters and (2) adapting the initial QoM classification model parameters, based on the QoM class criteria 1081, to provide thereby the QoM classification model 1013. The QoM classification model 1013 learned at the sender site 1011 is refined, based on recent data cycles at the sender 1010, during the given training period and is considered to be matured after the given training period (e.g., matured in the sense that the QoM classification model 1013 then has fixed QoM classification model parameters, such as QoM class sensitivity parameters, which may be updated only if the QoM classification model 1013 is reset and trained again).

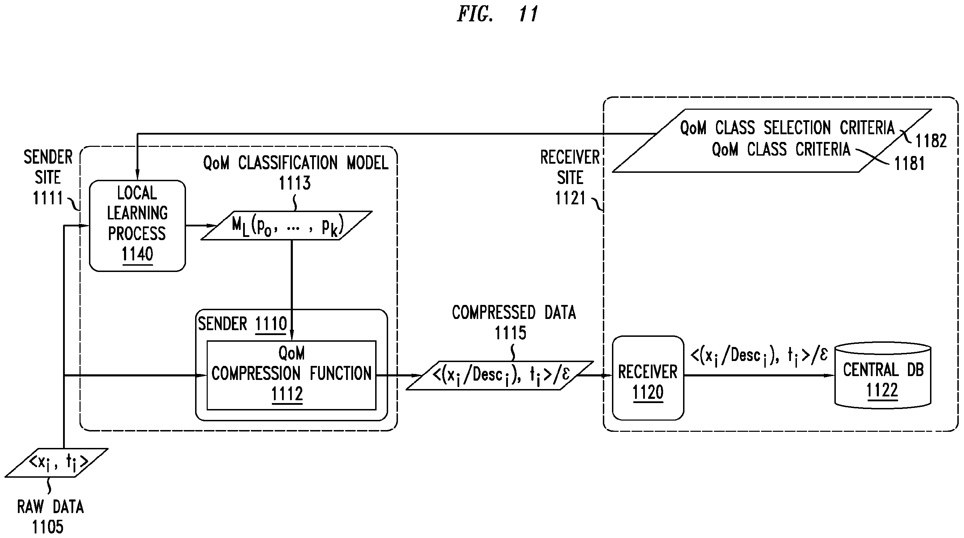

FIG. 11 depicts an embodiment of the data collection control capability in which learning of the QoM classification model based on automation techniques is performed at the sender site using continuous training. In FIG. 11, a sender 1110 is located at a sender site 1111 (e.g., a MEC environment or the like) and a receiver 1120 is located at a receiver site 1121 (e.g., a central cloud). The sender 1110 at the sender site 1111 selects, from raw data 1105 at the sender site 1111, compressed data 1115 that is provided to the receiver 1120 at the receiver site 1121. The sender 1110 at the sender site 1111 selects the compressed data 1115 based on the QoM classification model (denoted as M_{L}(p₀,...,pₖ)) using a QoM compression function 1112. The QoM classification model 1113 that is used by the sender 1110 to select the compressed data 1115 is learned at the sender site 1111. The sender site 1111 is assisted with learning the QoM classification model 1113 based on QoM criteria received by the sender site 1111 from the receiver site 1121. The QoM criteria received by the sender site 1111 from the receiver site 1121 includes QoM class selection criteria 1182 and QoM class criteria 1181. For example, the QoM criteria may include mappings of QoM class sensitivity parameters to n-th percentiles of absolute consecutive deviation or other types of QoM class selection criteria or QoM class criteria. The QoM criteria received by the sender site 1111 from the receiver site 1121 may be considered to be a skeleton of the QoM classification model 1113 that is ultimately learned at the sender site 1111. The QoM classification model 1113 learned at the sender site 1111 is learned at the sender site 1111 by a local learning process 1140 based on the raw data 1105 (where the raw data 1105 may be obtained by the local learning process 1140 as the raw data 1105 arrives or from a local storage at the sender site 1111) and the QoM criteria from the receiver site 1121. The local learning process 1140 may learn the QoM classification model 1113 by (1) selecting an initial QoM classification model, based on the QoM class selection criteria 1182, having initial QoM classification model parameters and (2) adapting the initial QoM classification model parameters, based on the QoM class criteria 1181, to provide thereby the QoM classification model parameters for the QoM classification model 1113. The QoM classification model 1113 learned at the sender site 1111 is refined, based on recent data cycles at the sender 1110, over time.

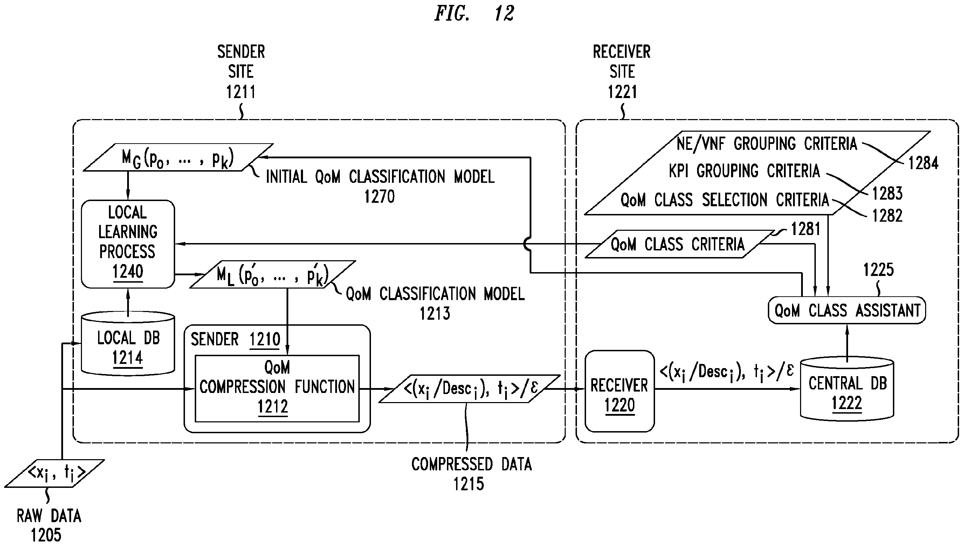

FIG. 12 depicts an embodiment of the data collection control capability in which learning of the QoM classification model based on automation techniques is performed at the sender site using an initial QoM classification model from the receiver site with a given training period. In FIG. 12, a sender 1210 is located at a sender site 1211 (e.g., a MEC environment or the like) and a receiver 1220 is located at a receiver site 1221 (e.g., a central cloud). The sender 1210 at the sender site 1211 selects, from raw data 1205 at the sender site 1211, compressed data 1215 that is provided to the receiver 1220 at the receiver site 1221. The sender 1210 at the sender site 1211 selects the compressed data 1215 based on a QoM classification model 1213 (denoted as M_{L}(p'₀,...,p'ₖ)) using a QoM compression function 1212. The QoM classification model 1213 that is used by the sender 1210 to select the compressed data 1215 is learned at the sender site 1210. The sender site 1210 is assisted with learning the QoM classification model 1213 based on an initial QoM classification model 1270 (denoted as M_{G}(p₀,... ,pₖ)) received by the sender site 1211 from the receiver site 1221. The initial QoM classification model 1270 is determined at the receiver site 1221 from global data in a central database 1222 at the receiver site 1221. The initial QoM classification model 1270 is determined at the receiver site 1221 by a QoM class assistant 1225 based on NE/VNF grouping criteria 1284, KPI grouping criteria 1283, QoM class selection criteria 1282, and QoM class criteria 1281. The initial QoM classification model 1270 may be determined at the receiver site 1221 using the process presented with respect to FIG. 8. The initial QoM classification model 1270 includes a set of initial QoM classification model parameters (namely, p₀,...,pₖ), which are adapted at the sender site 1210 to determine the QoM classification model 1213. The QoM classification model 1213 learned at the sender site 1210 is learned at the sender site 1210 by a local learning process 1240 based on raw data 1205 (where the raw data 1205 may be obtained by the local learning process 1240 from a local database 1214 that stores the raw data 1205), the initial QoM classification model 1270 received from the QoM class assistant 1225 at the receiver site 1220, and the QoM class criteria 1281 received from the receiver site 1220. The local learning process 1240 may learn the QoM classification model 1213 by adapting the initial QoM classification model parameters of the initial QoM classification model 1270, based on the QoM class criteria 1281, to provide thereby the QoM classification model parameters for the QoM classification model 1213. The QoM classification model 1213 learned at the sender site 1210 is refined from the initial QoM classification model 1270, based on recent data cycles at the sender 1210, during the given training period.

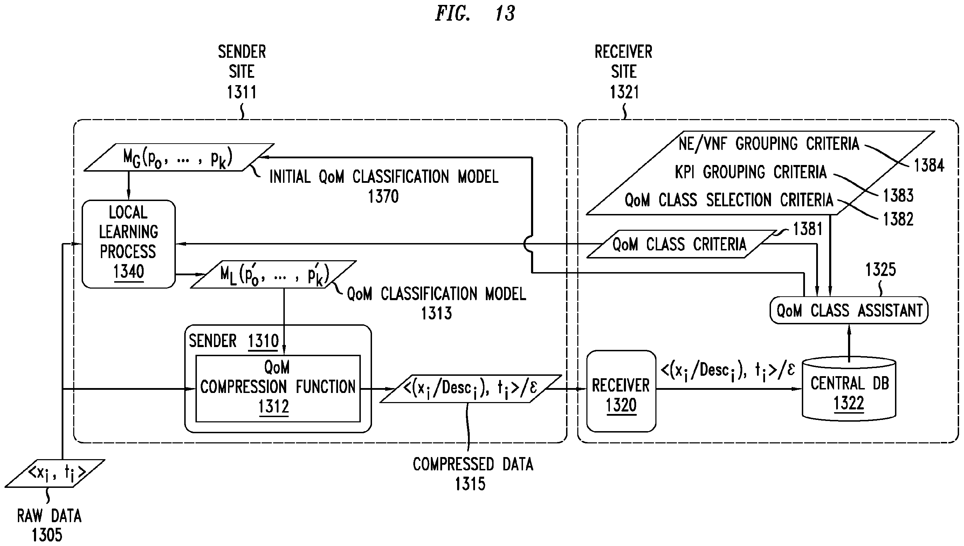

FIG. 13 depicts an embodiment of the data collection control capability in which learning of the QoM classification model based on automation techniques is performed at the sender site using an initial QoM classification model from the receiver site with continuous training. In FIG. 13, a sender 1310 is located at a sender site 1311 (e.g., a MEC environment or the like) and a receiver 1320 is located at a receiver site 1321 (e.g., a central cloud). The sender 1310 at the sender site 1311 selects, from raw data 1305 at the sender site 1311, compressed data 1315 that is provided to the receiver 1320 at the receiver site 1321. The sender 1310 at the sender site 1311 selects the compressed data 1315 based on a QoM classification model 1313 (denoted as M_{j,t}(p₀,...,pₖ)) using a QoM compression function 1312. The QoM classification model 1313 that is used by the sender 1310 to select the compressed data 1315 is learned at the sender site 1310. The sender site 1311 is assisted with learning the QoM classification model 1313 based on an initial QoM classification model 1370 (denoted as M_{G}(p₀,...,pₖ)) received by the sender site 1311 from the receiver site 1321. The initial QoM classification model is determined at the receiver site 1321 from global data in a central database 1322 at the receiver site 1321. The initial QoM classification model is determined at the receiver site 1321 by a QoM class assistant 1325 based on NE/VNF grouping criteria 1384, KPI grouping criteria 1383, QoM class selection criteria 1382, and QoM class criteria 1381. The initial QoM classification model 1370 may be determined at the receiver site 1321 using the process presented with respect to FIG. 8. The initial QoM classification model 1370 includes a set of initial QoM classification model parameters (namely, p₀,...,pₖ), which are adapted at the sender site 1311 to determine the QoM classification model 1313. The QoM classification model 1313 learned at the sender site 1311 is learned at the sender site 1311 by a local learning process 1340 based on raw data 1305 (where the raw data 1305 may be obtained by the local learning process 1340 as the raw data 1305 arrives or from a local storage at the sender site 1311), the initial QoM classification model 1370 received from the QoM class assistant 1325 at the receiver site 1320, and the QoM class criteria 1381 received from the receiver site 1320. The local learning process 1340 may learn the QoM classification model 1313 by adapting the initial QoM classification model parameters of the initial QoM classification model 1370, based on the QoM class criteria 1381, to provide thereby the QoM classification model parameters for the QoM classification model 1313. The QoM classification model 1313 learned at the sender site 1311 is refined from the initial QoM classification model 1370, based on recent data cycles at the sender 1310, continuously.

It will be appreciated that the foregoing embodiments presented with respect to FIGs. 9 - 13 represent some of the ways in which learning of the QoM classification model based on automation techniques may be provided and, therefore, that learning of the QoM classification model based on automation techniques may be provided in other ways (e.g., other distributions of information, other distributions of automation functions, or the like, as well as various combinations thereof).

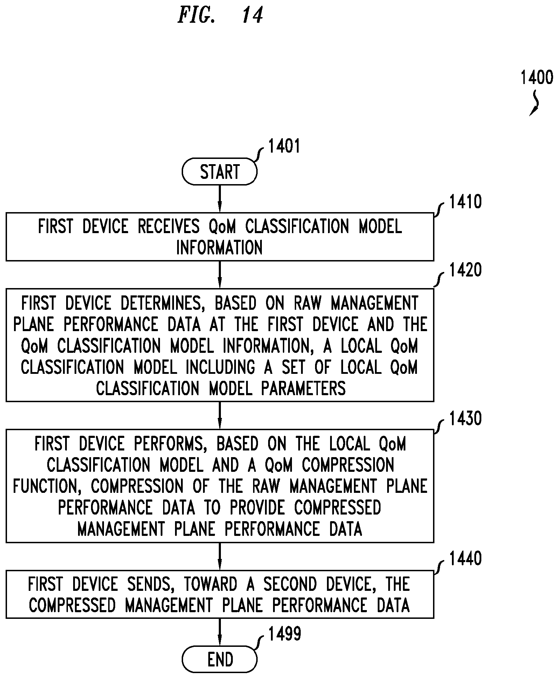

FIG. 14 depicts an embodiment of a method for use by an element of a receiver site to provide embodiments of the data collection control capability. It is noted that the elements of method 1400 are primarily described as being performed by a first device of the receiver site for supporting collection of compressed management plane performance data from a second device (e.g., an element of a sender site). It is noted that, although primarily presented as being performed serially, at least a portion of the functions of method 1400 of FIG. 14 may be performed contemporaneously or in a different order than as presented in FIG. 14. At block 1401, method 1400 begins. At block 1410, the first device receives, from a second device, management plane performance data. At block 1420, the first device determines, based on the management plane performance data, QoM classification model information for the second device. At block 1430, the first device sends, toward the second device, the QoM classification model information. At block 1440, the first device receives, from the second device, compressed management plane performance data determined by the second device based on a local QoM classification model determined by the second device based on the QoM classification model information. At block 1499, method 1400 ends.

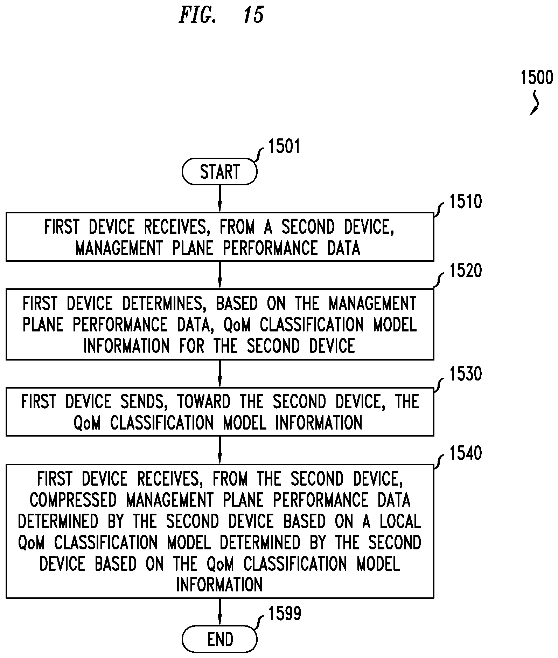

FIG. 15 depicts an embodiment of a method for use by an element of a sender site to provide embodiments of the data collection control capability. It is noted that the elements of method 1500 are primarily described as being performed by a first device of the sender site for providing compressed management plane performance data to a second device (e.g., an element of a sender site).It is noted that, although primarily presented as being performed serially, at least a portion of the functions of method 1500 of FIG. 15 may be performed contemporaneously or in a different order than as presented in FIG. 15. At block 1501, the method 1500 begins. At block 1510, the first device receives QoM classification model information. At block 1520, the first device determines, based on raw management plane performance data at the first device and the QoM classification model information, a local QoM classification model including a set of local QoM classification model parameters. At block 1530, the first device performs, based on the local QoM classification model and a QoM compression function, compression of raw management plane performance data to provide compressed management plane performance data. At block 1540, the first device sends toward a second device, the compressed management plane performance data. At block 1599, the method 1500 ends.

It will be appreciated that, although embodiments of the data collection control capability are primarily presented herein as being used within specific contexts, various embodiments of the data collection control capability may be used within various other contexts (e.g., for transfer of data from other types of senders, for transfer of data to other types of receivers, for compression and transfer of other types of data, or the like, as well as various combinations thereof). Various embodiments of the data collection control capability may be applied for supporting compression of various types of data which may be transferred between various types of devices within various types of environments.

Various embodiments of the data collection control capability may provide various advantages or potential advantages. Various embodiments of the data collection control capability may automate removal of redundant data transfers, which is particularly useful as networks have grown to be overwhelmingly large and are still growing. Various embodiments of the data collection control capability may learn differentiated monitoring of important and least important managed objects and performance metrics, thereby reducing data collection traffic significantly and, thus, simplifying various complexities associated with data collection traffic (e.g., its collection, transmission, storage, and processing complexities). It is noted that such reductions in data transfers may save archive-side (e.g., NMS side) resources (e.g., bandwidth, storage, processing, or the like) dedicated for use in data collection, may reduce data transfer energy consumption, or the like. It is further noted that such reductions in data transfers may enable existing data collection solutions to support upcoming networks (e.g., 5G cellular networks or other types of networks in which large quantities of management plane performance data may be collected) without requiring significant "big data" framework upgrades. Various embodiments of the data collection control capability may enable faster data collection cycles. Various embodiments of the data collection control capability may enable exploration of data collection possibilities which might otherwise be unforeseeable. Various embodiments of the data collection control capability may enable relatively quick and efficient generation and adaptation of data collection classification models. Various embodiments of the data collection control capability may reduce or eliminate the need for human intervention under various conditions associated with collection of data in communication networks. Various embodiments of the data collection control capability may enable retraining of classification models under various conditions (e.g., responsive to changes of managed objects, managed object topologies, or the like). Various embodiments of the data collection control capability which utilize centrally-determined initial models for controlling data collection classification models ensure that the learned data collection classification models are in predefined ranges. Various embodiments of the data collection control capability which are utilized within the context of cellular systems may be agnostic to cellular technology, thereby eliminating problems which may result when network engineers are not experts in the particular generation of cellular technology being used (and, thus, are unable to define associated data collection model classifications). Various embodiments of the data collection control capability which are utilized within the context of a distributed mobile system using MEC may have improved or optimal computational resource requirements at the mobile edge environments which are resource-scarce (e.g., the consumptions may be in line with the latest MEC guidelines). Various embodiments of the data collection control capability may provide various other advantages or potential advantages.

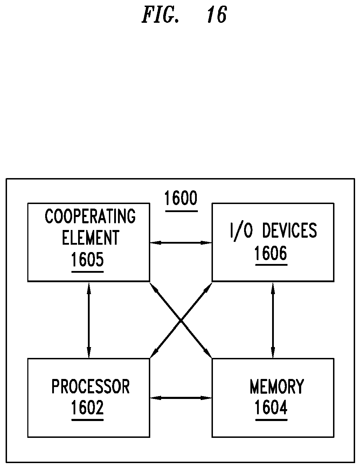

FIG. 16 depicts a high-level block diagram of a computer suitable for use in performing various functions described herein.

The computer 1600 includes a processor 1602 (e.g., a central processing unit (CPU), a processor having a set of one or more processor cores, or the like) and a memory 1604 (e.g., a random access memory (RAM), a read only memory (ROM), or the like). The processor 1602 and the memory 1604 are communicatively connected.

The computer 1600 also may include a cooperating element 1605. The cooperating element 1605 may be a hardware device. The cooperating element 1605 may be a process that can be loaded into the memory 1604 and executed by the processor 1602 to implement functions as discussed herein (in which case, for example, the cooperating element 1605 (including associated data structures) can be stored on a non-transitory computer-readable storage medium, such as a storage device or other storage element (e.g., a magnetic drive, an optical drive, or the like)).

The computer 1600 also may include one or more input/output devices 1606. The input/output devices 1606 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices or elements (e.g., a tape drive, a floppy drive, a hard disk drive, a compact disk drive, or the like), or the like, as well as various combinations thereof.

It will be appreciated that computer 1600 of FIG. 16 may represent a general architecture and functionality suitable for implementing functional elements described herein, portions of functional elements described herein, or the like, as well as various combinations thereof. For example, computer 1600 may provide a general architecture and functionality that is suitable for implementing one or more of a sender, a receiver, a QoM compression function, a global learning process, a local learning process, a learning assistant, a monitoring function, or any other elements presented herein.

It will be appreciated that the functions depicted and described herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits (ASIC), and/or any other hardware equivalents).

It will be appreciated that at least some of the functions discussed herein as software methods may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer-readable media), transmitted via a data stream in a broadcast or other signal bearing medium, and/or stored within a memory within a computing device operating according to the instructions.

It will be appreciated that the term "or" as used herein refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. A managed device, comprising:
a processor and a memory communicatively connected to the processor, the processor configured to:
communicate with a management device;
send toward the management device, the raw or compressed management plane performance data;
receive (1410) quality-of-monitoring, QoM, classification model information;
determine (1420) based on raw management plane performance data at the managed device and the QoM classification model information, a local QoM classification model comprising a set of local QoM classification model parameters;
perform (1430) based on the local QoM classification model and a QoM compression function, compression of raw management plane performance data to provide compressed management plane performance data; and
send (1440) toward the management device, the compressed management plane performance data.

2. The apparatus of claim 1, wherein the QoM classification model information comprises QoM class selection criteria and QoM class criteria.

3. The apparatus of claim 2, wherein, to determine the local QoM classification model, the processor is configured to:
select, based on the QoM class selection criteria, a QoM class for the local QoM classification model.

4. The apparatus of claim 3, wherein, to determine the local QoM classification model, the processor is configured to:
determine, based on the QoM class, an initial QoM classification model comprising a set of initial QoM classification model parameters; and
determine, based on the set of initial QoM classification model parameters, the QoM class criteria, and the raw management plane performance data, the set of local QoM classification model parameters.

5. The apparatus of claim 1, wherein the QoM classification model information comprises QoM class criteria and an initial QoM classification model including a set of initial QoM classification model parameters.

6. The apparatus of claim 5, wherein, to determine the local QoM classification model, the processor is configured to:
determine, based on the set of initial QoM classification model parameters, the QoM class criteria, and the raw management plane performance data, the set of local QoM classification model parameters.

7. The apparatus of claim 1, wherein the QoM classification model information comprises QoM class criteria, the processor is configured to continuously monitor and analyze QoM compression function, and based on determination that the QoM class criteria is not satisfied, initiate modification of the QoM classification model.

8. The apparatus of claim 7, wherein the processor is configured to:
determine, by the first device based on monitoring of the QoM compression function at the first device, whether to modify the local QoM classification model.

9. The apparatus of claim 8, wherein the processor is configured to determine whether to modify the local QoM classification model based on the raw management plane performance data, the compressed management plane performance data, and the QoM class criteria.

10. A management device, comprising:
a processor and a memory communicatively connected to the processor, the processor configured to:
communicate with a managed device;
receive (1510) from the managed device, raw or compressed management plane performance data;
determine (1520) based on the raw or compressed management plane performance data, quality-of-monitoring, QoM, classification model information for the managed device;
send (1530) toward the managed device, the QoM classification model information for compressing management plane performance data; and as a response
receive (1540) from the managed device, compressed management plane performance data.

11. The apparatus of claim 10, wherein the QoM classification model information comprises the local QoM classification model.

12. The apparatus of claim 10, wherein the QoM classification model information comprises:
QoM class selection criteria configured for use in selecting an initial QoM classification model comprising a set of initial QoM classification model parameters; and
QoM class criteria configured for use in adapting the set of initial QoM classification model parameters of the initial QoM classification model to provide a set of local QoM classification model parameters for the local QoM classification model.

13. The apparatus of claim 10, wherein the QoM classification model information comprises:
an initial QoM classification model comprising a set of initial QoM classification parameters; and
QoM class criteria configured for use in adapting the set of initial QoM classification model parameters of the initial QoM classification model to provide a set of local QoM classification model parameters for the local QoM classification model.

14. The apparatus of claim 10, wherein the QoM classification model information comprises QoM class criteria, the processor is configured to continuously monitor and analyze QoM compression function, and based on determination that the QoM class criteria is not satisfied, initiate modification of the QoM classification model.

15. A system, comprising:
a management device of claim 10; and
a managed device of claim 1.

## Patentansprüche

1. Verwaltete Vorrichtung, die Folgendes umfasst:
einen Prozessor und einen Speicher, der kommunikativ mit dem Prozessor verbunden ist, wobei der Prozessor zu Folgendem ausgelegt ist:
Kommunizieren mit einer Verwaltungsvorrichtung;
Senden der rohen oder komprimierten Leistungsdaten auf Verwaltungsebene zur Verwaltungsvorrichtung;
Empfangen (1410) von Überwachungsqualitäts(QoM)-Klassifizierungsmodellinformationen;
Bestimmen (1420) eines lokalen QoM-Klassifizierungsmodells, das einen Satz von lokalen QoM-Klassifizierungsmodellparametern umfasst, auf Basis von rohen Leistungsdaten auf Verwaltungsebene an der verwalteten Vorrichtung und der QoM-Klassifizierungsmodellinformationen;
Durchführen (1430) einer Komprimierung von rohen Leistungsdaten auf Verwaltungsebene auf Basis des lokalen QoM-Klassifizierungsmodells und einer QoM-Komprimierungsfunktion, um komprimierte Leistungsdaten auf Verwaltungsebene bereitzustellen; und
Senden (1440) der komprimierten Leistungsdaten auf Verwaltungsebene zur Verwaltungsvorrichtung.

2. Einrichtung nach Anspruch 1, wobei die QoM-Klassifizierungsmodellinformationen QoM-Klassenauswahlkriterien und QoM-Klassenkriterien umfassen.

3. Einrichtung nach Anspruch 2, wobei der Prozessor zum Bestimmen des lokalen QoM-Klassifizierungsmodells zu Folgendem ausgelegt ist:
Auswählen einer QoM-Klasse für das lokale QoM-Klassifizierungsmodell auf Basis der QoM-Klassenauswahlkriterien.

4. Einrichtung nach Anspruch 3, wobei der Prozessor zum Bestimmen des lokalen QoM-Klassifizierungsmodells zu Folgendem ausgelegt ist:
Bestimmen eines anfänglichen QoM-Klassifizierungsmodells, das einen Satz von anfänglichen QoM-Klassifizierungsmodellparametern umfasst, auf Basis der QoM-Klasse; und
Bestimmen des Satzes von lokalen QoM-Klassifizierungsmodellparametern auf Basis des Satzes von anfänglichen QoM-Klassifizierungsmodellparametern, der QoM-Klassenkriterien und der rohen Leistungsdaten auf Verwaltungsebene.

5. Einrichtung nach Anspruch 1, wobei die QoM-Klassifizierungsmodellinformationen QoM-Klassenkriterien und ein anfängliches QoM-Klassifizierungsmodell, das einen Satz von anfänglichen QoM-Klassifizierungsmodellparametern beinhaltet, umfassen.

6. Einrichtung nach Anspruch 5, wobei der Prozessor zum Bestimmen des lokalen QoM-Klassifizierungsmodells zu Folgendem ausgelegt ist:
Bestimmen des Satzes von lokalen QoM-Klassifizierungsmodellparametern auf Basis des Satzes von anfänglichen QoM-Klassifizierungsmodellparametern, der QoM-Klassenkriterien und der rohen Leistungsdaten auf Verwaltungsebene.

7. Einrichtung nach Anspruch 1, wobei die QoM-Klassifizierungsmodellinformationen QoM-Klassenkriterien umfassen, der Prozessor dazu ausgelegt ist, eine QoM-Komprimierungsfunktion kontinuierlich zu überwachen und zu analysieren und auf der Bestimmung, dass die QoM-Klassenkriterien nicht erfüllt sind, basierend, eine Änderung des QoM-Klassifizierungsmodells zu initiieren.

8. Einrichtung nach Anspruch 7, wobei der Prozessor zu Folgendem ausgelegt ist:
Bestimmen auf Basis der Überwachung der QoM-Komprimierungsfunktion an der ersten Vorrichtung, ob das lokale QoM-Klassifizierungsmodell geändert werden soll, durch die erste Vorrichtung.

9. Einrichtung nach Anspruch 8, wobei der Prozessor dazu ausgelegt ist, auf Basis der rohen Leistungsdaten auf Verwaltungsebene, der komprimierten Leistungsdaten auf Verwaltungsebene und der QoM-Klassenkriterien zu bestimmen, ob das lokale QoM-Klassifizierungsmodell geändert werden soll.

10. Verwaltungsvorrichtung, die Folgendes umfasst:
einen Prozessor und einen Speicher, der kommunikativ mit dem Prozessor verbunden ist, wobei der Prozessor zu Folgendem ausgelegt ist:
Kommunizieren mit einer verwalteten Vorrichtung;
Empfangen (1510) von rohen oder komprimierten Leistungsdaten auf Verwaltungsebene von der verwalteten Vorrichtung;
Bestimmen (1520) von Überwachungsqualitäts(QoM)-Klassifizierungsmodellinformationen für die verwaltete Vorrichtung auf Basis der rohen oder komprimierten Leistungsdaten auf Verwaltungsebene;
Senden (1530) der QoM-Klassifizierungsmodellinformationen zum Komprimieren der Leistungsdaten auf Verwaltungsebene an die verwaltete Vorrichtung; und als eine Reaktion
Empfangen (1540) von komprimierten Leistungsdaten auf Verwaltungsebene von der verwalteten Vorrichtung.

11. Einrichtung nach Anspruch 10, wobei die QoM-Klassifizierungsmodellinformationen das lokale QoM-Klassifizierungsmodell umfassen.

12. Einrichtung nach Anspruch 10, wobei die QoM-Klassifizierungsmodellinformationen Folgendes umfassen:
QoM-Auswahlkriterien, die zur Verwendung bei der Auswahl eines anfänglichen QoM-Klassifizierungsmodells, das einen Satz von anfänglichen QoM-Klassifizierungsmodellparametern umfasst, ausgelegt sind; und
QoM-Klassenkriterien, die zur Verwendung beim Anpassen des Satzes von anfänglichen QoM-Klassifizierungsmodellparametern des anfänglichen QoM-Klassifizierungsmodells, um einen Satz von lokalen QoM-Klassifizierungsmodellparametern für das lokale QoM-Klassifizierungsmodell bereitzustellen, ausgelegt sind.

13. Einrichtung nach Anspruch 10, wobei die QoM-Klassifizierungsmodellinformationen Folgendes umfassen:
ein anfängliches QoM-Klassifizierungsmodell, das einen Satz von anfänglichen QoM-Klassifizierungsparametern umfasst; und
QoM-Klassenkriterien, die zur Verwendung beim Anpassen des Satzes von anfänglichen QoM-Klassifizierungsmodellparametern des anfänglichen QoM-Klassifizierungsmodells, um einen Satz von lokalen QoM-Klassifizierungsmodellparametern für das lokale QoM-Klassifizierungsmodell bereitzustellen, ausgelegt sind.

14. Einrichtung nach Anspruch 10, wobei die QoM-Klassifizierungsmodellinformationen QoM-Klassenkriterien umfassen, der Prozessor dazu ausgelegt ist, eine QoM-Komprimierungsfunktion kontinuierlich zu überwachen und zu analysieren und auf der Bestimmung, dass die QoM-Klassenkriterien nicht erfüllt sind, basierend, eine Änderung des QoM-Klassifizierungsmodells zu initiieren.

15. System, das Folgendes umfasst:
eine Verwaltungsvorrichtung nach Anspruch 10; und
eine verwaltete Vorrichtung nach Anspruch 1.

## Revendications

1. Dispositif géré, comprenant :
un processeur et une mémoire connectée communicativement au processeur, le processeur étant configuré pour :
communiquer avec un dispositif de gestion ;
envoyer vers le dispositif de gestion, les données de performance de plan de gestion brutes ou compressées ;
recevoir (1410) des informations de modèle de classification de qualité de surveillance, QoM ;
déterminer (1420) sur la base de données de performance de plan de gestion brutes au niveau du dispositif géré et des informations de modèle de classification QoM, un modèle de classification QoM local comprenant un ensemble de paramètres de modèle de classification QoM locaux ;
effectuer (1430) sur la base du modèle de classification QoM local et d'une fonction de compression QoM, la compression de données de performance de plan de gestion brutes pour fournir des données de performance de plan de gestion compressées ; et
envoyer (1440) vers le dispositif de gestion, les données de performance de plan de gestion compressées.

2. Appareil selon la revendication 1, dans lequel les informations de modèle de classification QoM comprennent des critères de sélection de classe QoM et des critères de classe QoM.

3. Appareil selon la revendication 2, dans lequel, pour déterminer le modèle de classification QoM local, le processeur est configuré pour :
sélectionner, sur la base des critères de sélection de classe QoM, une classe QoM pour le modèle de classification QoM local.

4. Appareil selon la revendication 3, dans lequel, pour déterminer le modèle de classification QoM local, le processeur est configuré pour :
déterminer, sur la base de la classe QoM, un modèle de classification QoM initial comprenant un ensemble de paramètres de modèle de classification QoM initiaux ; et
déterminer, sur la base de l'ensemble de paramètres de modèle de classification QoM initiaux, des critères de classe QoM, et des données de performance de plan de gestion brutes, l'ensemble de paramètres de modèle de classification QoM locaux.

5. Appareil selon la revendication 1, dans lequel les informations de modèle de classification QoM comprennent des critères de classe QoM et un modèle de classification QoM initial incluant un ensemble de paramètres de modèle de classification QoM initiaux.

6. Appareil selon la revendication 5, dans lequel, pour déterminer le modèle de classification QoM local, le processeur est configuré pour :
déterminer, sur la base de l'ensemble de paramètres de modèle de classification QoM initiaux, des critères de classe QoM, et des données de performance de plan de gestion brutes, l'ensemble de paramètres de modèle de classification QoM locaux.

7. Appareil selon la revendication 1, dans lequel les informations de modèle de classification QoM comprennent des critères de classe QoM, le processeur est configuré pour surveiller et analyser en continu une fonction de compression QoM, et sur la base de la détermination que les critères de classe QoM ne sont pas satisfaits, initier la modification du modèle de classification QoM.

8. Appareil selon la revendication 7, dans lequel le processeur est configuré pour :
déterminer, par le premier dispositif sur la base de la surveillance de la fonction de compression QoM au niveau du premier dispositif, s'il faut modifier le modèle de classification QoM local.

9. Appareil selon la revendication 8, dans lequel le processeur est configuré pour déterminer s'il faut modifier le modèle de classification QoM local sur la base des données de performance de plan de gestion brutes, des données de performance de plan de gestion compressées, et des critères de classe QoM.

10. Dispositif de gestion, comprenant :
un processeur et une mémoire connectée communicativement au processeur, le processeur étant configuré pour :
communiquer avec un dispositif géré ;
recevoir (1510) en provenance du dispositif géré, des données de performance de plan de gestion brutes ou compressées ;
déterminer (1520) sur la base des données de performance de plan de gestion brutes ou compressées, des informations de modèle de classification de qualité de surveillance, QoM, pour le dispositif géré ;
envoyer (1530) vers le dispositif géré, les informations de modèle de classification QoM pour compresser des données de performance de plan de gestion ; et en réponse
recevoir (1540) en provenance du dispositif géré, des données de performance de plan de gestion compressées.

11. Appareil selon la revendication 10, dans lequel les informations de modèle de classification QoM comprennent le modèle de classification QoM local.

12. Appareil selon la revendication 10, dans lequel les informations de modèle de classification QoM comprennent :
des critères de sélection de classe QoM configurés pour une utilisation dans la sélection d'un modèle de classification QoM initial comprenant un ensemble de paramètres de modèle de classification QoM initiaux ; et
des critères de classe QoM configurés pour une utilisation dans l'adaptation de l'ensemble de paramètres de modèle de classification QoM initiaux du modèle de classification QoM initial pour fournir un ensemble de paramètres de modèle de classification QoM locaux pour le modèle de classification QoM local.

13. Appareil selon la revendication 10, dans lequel les informations de modèle de classification QoM comprennent :
un modèle de classification QoM initial comprenant un ensemble de paramètres de classification QoM initiaux ; et
des critères de classe QoM configurés pour une utilisation dans l'adaptation de l'ensemble de paramètres de modèle de classification QoM initiaux du modèle de classification QoM initial pour fournir un ensemble de paramètres de modèle de classification QoM locaux pour le modèle de classification QoM local.

14. Appareil selon la revendication 10, dans lequel les informations de modèle de classification QoM comprennent des critères de classe QoM, le processeur est configuré pour surveiller et analyser en continu une fonction de compression QoM, et sur la base de la détermination que les critères de classe QoM ne sont pas satisfaits, initier la modification du modèle de classification QoM.

15. Système, comprenant :
un dispositif de gestion selon la revendication 10 ; et
un dispositif géré selon la revendication 1.
